# EUROPEAN PATENT SPECIFICATION

(11) **EP 4 477 481 B1**
(45) Date of publication and mention of the grant of the patent: **16.09.2026**
(21) Application number: 24150275.6
(22) Date of filing: 03.01.2024
(51) Int. Cl.: B60T 7/04, B60T 8/172, B60T 8/40, B60T 8/88, B60T 13/14, B60T 13/74, B60T 17/22

(54) **REDUNDANT BRAKE SYSTEM**
REDUNDANTE BREMSANLAGE
SYSTÈME DE FREINAGE REDONDANT

(30) Priority: 16.06.2023 KR 20230077347
(43) Date of publication of application: 18.12.2024
(73) Proprietor: HL Mando Corporation, Pyeongtaek-si, Gyeonggi-do 17962 (KR)
(72) Inventor: LEE, Changwoo, Seongnam-si, Gyeonggi-do 13475 (KR)
(74) Representative: Pfenning, Meinig & Partner mbB

(56) References cited:
- CN-A- 113 646 217
- DE-A1- 102018 002 990
- US-B1- 11 305 747

## Description

### BACKGROUND

### 1. Field

The invention generally relates to an electro-hydraulic brake system.

### 2. Description of the Related Art

Brake systems for brake are essential to vehicles, and various types of brake systems for braking vehicles are proposed for the safety of drivers and passengers.

Existing brake systems have generally used a method of supplying hydraulic pressure for brake to a wheel cylinder through a booster mechanically connected to a brake pedal when a driver steps on the brake pedal.

However, the market's needs for embodying various braking functions by delicately responding to the operational environments of vehicles are increasing. Accordingly, lately, an electric brake system including a cylinder-piston type hydraulic pressure supply device that receives the driver's intention to brake as an electrical signal when a driver steps on the brake pedal and supplies hydraulic pressure for brake to the wheel cylinder is becoming increasingly widespread. Furthermore, an electric brake system further including an auxiliary supply device against failures (for example, a failure of an Electronic Control Unit (ECU), a failure of a motor, cut-off of power supply, etc.) of a hydraulic pressure supply device that is electrically controlled is being developed.

CN 113 646 217 A describes a brake system comprising: a first hydraulic pressure supplier hydraulically connected to one or more of wheel cylinders of a vehicle; a second hydraulic pressure supplier hydraulically connected to one or more of the wheel cylinders; a first controller configured to control the first hydraulic pressure supplier to provide a first hydraulic pressure to one or more of the wheel cylinders; and a second controller configured to control the second hydraulic pressure supplier to provide a second hydraulic pressure to one or more of the wheel cylinders, wherein the first controller is connected to a first power source of the vehicle and a wheel speed sensor of the vehicle, and the second controller is connected to a second power source of the vehicle. Further brake systems are described in US 11 305 747 B1 and DE 10 2018 002990 A1.

### SUMMARY

It is an aspect of the present invention to provide a brake system including a hydraulic pressure supply device and an auxiliary supply device, which are capable of obtaining sensing information from a single sensor.

It is an aspect of the present invention to provide a brake system capable of stably obtaining sensing information even when an electrical failure occurs in a hydraulic pressure supply device or an auxiliary supply device.

Additional aspects of the invention will be set forth in part in the description which follows and, in part, will be obvious from the description, or may be learned by practice of the invention.

In accordance with an aspect of the invention, a brake system includes: a first hydraulic pressure supplier connected to a wheel cylinder of a vehicle; a second hydraulic pressure supplier connected to the wheel cylinder; a first controller configured to control the first hydraulic pressure supplier to provide first hydraulic pressure to the wheel cylinder; and a second controller configured to control the second hydraulic pressure supplier to provide second hydraulic pressure to the wheel cylinder. The first controller may be connected to a first power source of the vehicle and a wheel speed sensor of the vehicle, and configured to control a first current of the first power source to the wheel speed sensor via the second controller. The second controller may be connected to a second power source of the vehicle and the wheel speed sensor, and configured to allow or block the first current of the first power source to the wheel speed sensor and allow or block a second current of the second power source to the wheel speed sensor.

The first controller may include a first current sensor configured to output a first current signal corresponding to the first current, and a first processor configured to identify wheel speed of the vehicle based on the first current signal. The second controller may include a first switch configured to allow or block the first current of the first power source to the wheel speed sensor, a second switch configured to allow or block the second current of the second power source to the wheel speed sensor, a second current sensor configured to output a second current signal corresponding to the second current, and a second processor configured to control the first switch and the second switch and identify wheel speed of the vehicle based on the second current signal.

The first switch may be connected in series to the first current sensor between the first controller and the wheel speed sensor. The second switch may be connected in series to the second current sensor between the second power source and the wheel speed sensor.

The first processor may provide a periodic signal to the second processor based on identification that the first hydraulic pressure supplier is in a normal state. The second processor may control the second switch to allow the first current to the wheel speed sensor and control the second switch to block the second current to the wheel speed sensor, based on reception of the periodic signal from the first processor.

The first processor may provide no periodic signal to the second processor based on identification that the first hydraulic pressure supplier is in a failure state. The second processor may control the first switch to block the first current to the wheel speed sensor and control the second switch to allow the second current to the wheel speed sensor, based on identification that no periodic signal is received from the first processor.

The first processor may provide a periodic signal to the second processor and control the first hydraulic pressure supplier according to an output signal from a pedal sensor of the vehicle, based on identification that the first hydraulic pressure supplier is in a normal state. The second processor may control the second hydraulic pressure supplier according to an output signal from the pedal sensor of the vehicle, based on identification that no periodic signal is received from the first processor.

The second controller may further include a diode provided between a ground of the second controller and the first controller and configured to block current flowing from the first controller to the ground of the second controller.

In accordance with an aspect of the invention, a brake system includes: a first hydraulic pressure supplier connected to a wheel cylinder of a vehicle; a second hydraulic pressure supplier connected to the wheel cylinder; a first controller configured to control the first hydraulic pressure supplier to provide first hydraulic pressure to the wheel cylinder; and a second controller configured to control the second hydraulic pressure supplier to provide second hydraulic pressure to the wheel cylinder. The first controller may be connected to a first power source of the vehicle and a wheel speed sensor of the vehicle, and configured to allow or block a first current of the first power source to the wheel speed sensor via the second controller. The second controller may be connected to a second power source of the vehicle and the wheel speed sensor, and configured to allow or block a second current of the second power source to the wheel speed sensor.

The first controller may include a first switch configured to allow or block the first current of the first power source to the wheel speed sensor via the second controller, a first current sensor configured to output a first current signal corresponding to the first current, and a first processor configured to control the first switch and identify wheel speed of the vehicle based on the first current signal. The second controller may include a second switch configured to allow or block the second current of the second power source to the wheel speed sensor, a second current sensor configured to output a second current signal corresponding to the second current, and a second processor configured to identify wheel speed of the vehicle based on the second current signal.

The first switch may be connected in series to the first current sensor between the first power source and the second controller. The second switch may be connected in series to the second current sensor between the second power source and the wheel speed sensor.

The first processor may control the first switch to provide a periodic signal to the second processor and allow the first current to the wheel speed sensor, based on identification that the first hydraulic pressure supplier is in a normal state. The second processor may control the second switch to block the second current to the wheel speed sensor, based on reception of a periodic signal from the first processor.

The first processor may control the first switch to provide no periodic signal to the second processor and block the first current to the wheel speed sensor, based on identification that the first hydraulic pressure supplier is in a failure state. The second processor may control the second switch to allow the second current to the wheel speed sensor, based on identification that no periodic signal is received from the first processor.

The first processor may provide a periodic signal to the second processor and control the first hydraulic pressure supplier according to an output signal from a pedal sensor of the vehicle, based on identification that the first hydraulic pressure supplier is in a normal state. The second processor may control the second hydraulic pressure supplier according to an output signal from the pedal sensor of the vehicle, based on identification that no periodic signal is received from the first processor.

The second controller may further include a diode provided between a ground of the second controller and the first controller, and configured to block current flowing form the first controller to the ground of the second controller.

In accordance with an aspect of the invention, a brake system includes: a first hydraulic pressure supplier connected to a wheel cylinder of a vehicle; a second hydraulic pressure supplier connected to the wheel cylinder; a first controller configured to control the first hydraulic pressure supplier to provide first hydraulic pressure to the wheel cylinder; and a second controller configured to control the second hydraulic pressure supplier to provide second hydraulic pressure to the wheel cylinder. The first controller may be connected to a first power source of the vehicle and a wheel speed sensor of the vehicle, and configured to allow or block a first current of the first power source to the wheel speed sensor. The second controller may be connected to a second power source of the vehicle and the wheel speed sensor, and configured to allow or block a second current of the second power source to the wheel speed sensor.

The first controller may include a first switch configured to allow or block the first current of the first power source to the wheel speed sensor, a first current sensor configured to output a first current signal corresponding to the first current, and a first processor configured to control the first switch and identify wheel speed of the vehicle based on the first current signal. The second controller includes a second switch configured to allow or block the second current of the second power source to the wheel speed sensor, a second current sensor configured to output a second current signal corresponding to the second current, and a second processor configured to identify wheel speed of the vehicle based on the second current signal.

The first switch may be connected in series to the first current sensor between the first power source and the wheel speed sensor. The second switch may be connected in series to the second current sensor between the second power source and the wheel speed sensor.

The first processor may provide a periodic signal to the second processor and control the first switch to allow the first current to the wheel speed sensor, based on that identification that the first hydraulic pressure supplier is in a normal state. The second processor may control the second switch to block the second current to the wheel speed sensor, based on reception of a periodic signal from the first processor.

The first processor may provide no periodic signal to the second processor and control the first switch to block the first current to the wheel speed sensor, based on identification that the first hydraulic pressure supplier is in a failure state. The second processor may control the second switch to allow the second current to the wheel speed sensor, based on identification that no periodic signal is received from the first processor.

The first processor may provide a periodic signal to the second processor and control the first hydraulic pressure supplier according to an output signal from a pedal sensor of the vehicle, based on identification that the first hydraulic pressure supplier is in a normal state. The second processor may control the second hydraulic pressure supplier according to an output signal from the pedal sensor of the vehicle, based on identification that no periodic signal is received from the first processor.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a conceptual diagram showing a configuration of a vehicle according to an embodiment of the present invention;
FIG. 2 is a conceptual diagram for showing a configuration of a brake system according to another embodiment of the present invention;
FIG. 3 is a conceptual diagram for showing a configuration of a brake system according to still another embodiment of the present invention;
FIG. 4 is a block diagram for showing a configuration of first and second controllers included in a brake system according to an embodiment of the present invention;
FIG. 5 is a block diagram for showing connections between a first controller, a second controller, and a wheel speed sensor included in a brake system according to an embodiment of the present invention;
FIG. 6 is a block diagram for showing connections between a first controller, a second controller, and a wheel speed sensor included in a brake system according to an embodiment of the present invention;
FIG. 7 is a block diagram for showing connections between a first controller, a second controller, and a wheel speed sensor included in a brake system according to an embodiment of the present invention;
FIG. 8 is a block diagram for showing connections between a first controller, a second controller, and a wheel speed sensor included in a brake system according to an embodiment of the present invention;
   and
FIG. 9 is a block diagram for showing connections between a first controller, a second controller, and a wheel speed sensor included in a brake system according to an embodiment of the present invention.

### DETAILED DESCRIPTION

The following detailed description is provided to assist the reader in gaining a comprehensive understanding of the methods, apparatuses, and/or systems described herein.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. Like numerals denote like elements throughout.

It will be understood that, although the terms first, second, etc. may be used herein to describe various elements, these elements should not be limited by these terms. These terms are only used to distinguish one element from another. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present.

The terminology used herein is for the purpose of describing particular embodiments only and is not intended to be limiting. As used herein, the singular forms "a," "an," and "the," are intended to include the plural forms as well, unless the context clearly indicates otherwise.

The expression, "at least one of a, b, and c," should be understood as including only a, only b, only c, both a and b, both a and c, both b and c, or all of a, b, and c.

Reference will now be made in detail to the exemplary embodiments of the present disclosure, examples of which are illustrated in the accompanying drawings, wherein like reference numerals refer to like elements throughout.

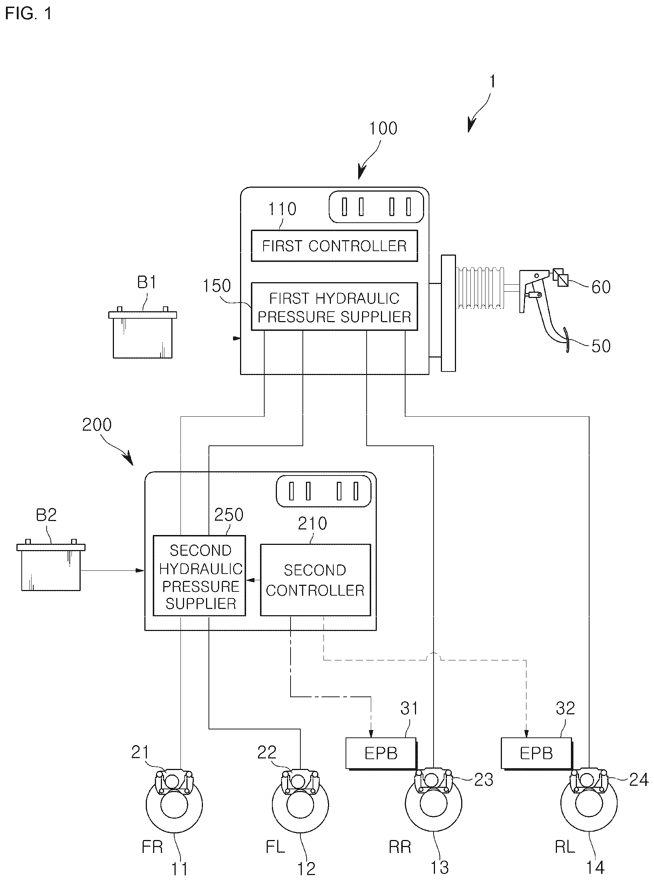

FIG. 1 is a conceptual diagram showing a configuration of a vehicle according to an embodiment of the present invention.

A vehicle 1 may include a body forming an appearance and accommodating a driver and/or baggage therein, a chassis including components of the vehicle 1 except for the body, and wheels 11, 12, 13, and 14 rotating to move the vehicle 1.

As shown in FIG. 1, the vehicle 1 may include, for example, a first wheel 11 provided in a front and right side of the vehicle 1, a second wheel 12 provided in a front and left side of the vehicle 1, a third wheel 13 provided in a rear and right side of the vehicle 1, and/or a fourth wheel 14 provided in a rear and left side of the vehicle 1. A number of the wheels 11, 12, 13, and 14 is not limited to four, and the vehicle 1 can have two, three or more than four wheels.

Each of the wheels 11, 12, 13, and 14 may be provided with a disc coupled to the corresponding wheel 11, 12, 13, or 14 and rotating together with the wheel 11, 12, 13, or 14. Also, each of the wheels 11, 12, 13, and 14 may be provided with a brake caliper that interferes with a rotation of the disc by using friction. Due to the friction between the disc and brake pads included in the brake caliper, the wheels 11, 12, 13, and 14 and the disc may be braked or stop rotating.

**In** the brake caliper, wheel cylinders 21, 22, 23, and 24 accommodating a pressurizing medium such as brake oil to move the brake pads such that the brake pads press the disc using pressure of the pressurizing medium (hereinafter, referred to as 'hydraulic pressure') may be provided.

For example, a first wheel cylinder 21 is installed in the first wheel 11, a second wheel cylinder 22 is installed in the second wheel 12, a third wheel cylinder 23 is installed in the third wheel 13, and a fourth wheel cylinder 24 is installed in the fourth wheel 14. A number of the wheel cylinders 21, 22, 23, and 24 is not limited to four, and the vehicle 1 can have two, three or more than four wheel cylinders.

The brake caliper may include parking brakes 31 and 32 for moving the brake pads by using an electrical-mechanical force without any hydraulic pressure such that the brake pads press the disc. For example, brake calipers associated with the third wheel 13 and the fourth wheel 14 provided in a rear portion of the vehicle 1 may be respectively provided with a first parking brake 31 and a second parking brake 32.

Each of the first and second parking brakes 31 and 32 may include a motor having a rotatable shaft, and a spindle configured to be linearly movable according to a rotation of the rotatable shaft of the motor. By the linear movement of the spindle, the brake pads may move linearly to press the disc.

Each of the first and second parking brakes 31 and 32 may move the brake pads toward the disc in response to a parking brake application signal. Also, each of the first and second parking brakes 31 and 32 may separate or move the brake pads away from the disc in response to a parking brake release signal.

Also, the vehicle 1 may further include a brake pedal 50 for obtaining a driver's intention to brake, and a first hydraulic pressure supply device 100 and a second hydraulic pressure supply device 200 for providing the pressurized medium to the wheel cylinders 21, 22, 23, and 24 to brake the wheels 11, 12, 13, and 14.

The first hydraulic pressure supply device 100 may generate pressure of the pressurized medium (hereinafter, referred to as 'hydraulic pressure') for braking the wheels 11, 12, 13, and 14. The first hydraulic pressure supply device 100 may generate hydraulic pressure based on the driver's intention to brake through the brake pedal 50 or a control signal for controlling brakes, and distribute the generated hydraulic pressure to the wheel cylinders 21, 22, 23, and 24. Internal pressure of the wheel cylinders 21, 22, 23, and 24 may depend on the hydraulic pressure provided from the first hydraulic pressure supply device 100. The wheels 11, 12, 13, and 14 may be respectively braked depending on the internal pressure of the wheel cylinders 21, 22, 23, and 24.

The first hydraulic pressure supply device 100 may include a first hydraulic pressure supplier 150 configured to provide hydraulic pressure to the wheel cylinders 21, 22, 23, and 24, and a first controller 110 configured to control the first hydraulic pressure supplier 150. The first controller 110 may control the first hydraulic pressure supplier 150 to provide and/or distribute hydraulic pressure to the wheel cylinders 21, 22, 23, and 24 based on the driver's intention to brake through the brake pedal 50 or the control signal for controlling the brakes. For example, the first controller 110 may be implemented with one or more memories configured to store computer executable instructions and/or one or more processors configured to execute the computer executable instructions stored in the memory.

The second hydraulic pressure supply device 200 may be provided on a connection flow path connecting the first hydraulic pressure supply device 100 to some of the wheel cylinders 21, 22, 23, and 24, and generate hydraulic pressure for braking some of the wheels 11, 12, 13, and 14. For example, as shown in FIG. 1, the second hydraulic pressure supply device 200 may be provided on a connection flow path connecting the first hydraulic pressure supply device 100 to the first and second wheel cylinders 21 and 22, and generate hydraulic pressure for braking the first and second wheels 11 and 12.

The second hydraulic pressure supply device 200 may be provided preliminarily or additionally with respect to the first hydraulic pressure supply device 100. For example, the second hydraulic pressure supply device 200 may be deactivated while the first hydraulic pressure supply device 100 normally operates. Also, the second hydraulic pressure supply device 200 may generate hydraulic pressure, instead of the first hydraulic pressure supply device 100, when the operation of the first hydraulic pressure supply device 100 is in an abnormal or failure state (e.g. power supply to the first hydraulic pressure supply device 100 is cut off or the first hydraulic pressure supply device 100 breaks down).

The second hydraulic pressure supply device 200 may generate hydraulic pressure based on the driver's intention to brake through the brake pedal 50 or a control signal for controlling brakes, and distribute the generated hydraulic pressure to some of the wheel cylinders 21, 22, 23, and 24. For example, the second hydraulic pressure supply device 200 may provide hydraulic pressure to the first and second wheel cylinders 21 and 22.

The second hydraulic pressure supply device 200 may include a second hydraulic pressure supplier 250 configured to provide hydraulic pressure to the first and second wheel cylinders 21 and 22, and a second controller 210 configured to control the second hydraulic pressure supplier 250. The second controller 210 may control the second hydraulic pressure supplier 250 to provide and/or distribute hydraulic pressure to some of the wheel cylinders 21, 22, 23, and 24 based on the driver's intention to brake through the brake pedal 50. For example, the second controller 210 may be implemented with one or more memories configured to store computer executable instructions and/or one or more processors configured to execute the computer executable instructions stored in the memory.

The second hydraulic pressure supply device 200 may supply power from a power network that is different or separate from another power network of the first hydraulic pressure supply device 100. For example, the second hydraulic pressure supply device 200 may receive power from a power source that is different or separate from another power network of the first hydraulic pressure supply device 100. As shown in FIG. 1, the first hydraulic pressure supply device 100 may receive power from a first battery B1, and the second hydraulic pressure supply device 200 may receive power from a second battery B2 that is different or separate from the first battery B1. As another example, the second hydraulic pressure supply device 200 may receive power from a power network that is different from another power network of the first hydraulic pressure supply device 100. The first hydraulic pressure supply device 100 may receive power from a first power network, and the second hydraulic pressure supply device 200 may receive power from a second power network that is different from the first power network.

As such, the first hydraulic pressure supply device 100 may supply hydraulic pressure to all of the first, second, third, and fourth wheel cylinders 21, 22, 23, and 24 to brake the first, second, third, and fourth wheels 11, 12, 13, and 14. However, the second hydraulic pressure supply device 200 may supply hydraulic pressure to some wheel cylinders such as the first and second wheel cylinders 21 and 22 to brake the first and second wheels 11 and 12. The first and second parking brakes 31 and 32 may brake the third and fourth wheels 13 and 14.

As described above, the second hydraulic pressure supply device 200 and the parking brakes 31 and 33 may be provided preliminarily or additionally against a failure of the first hydraulic pressure supply device 100.

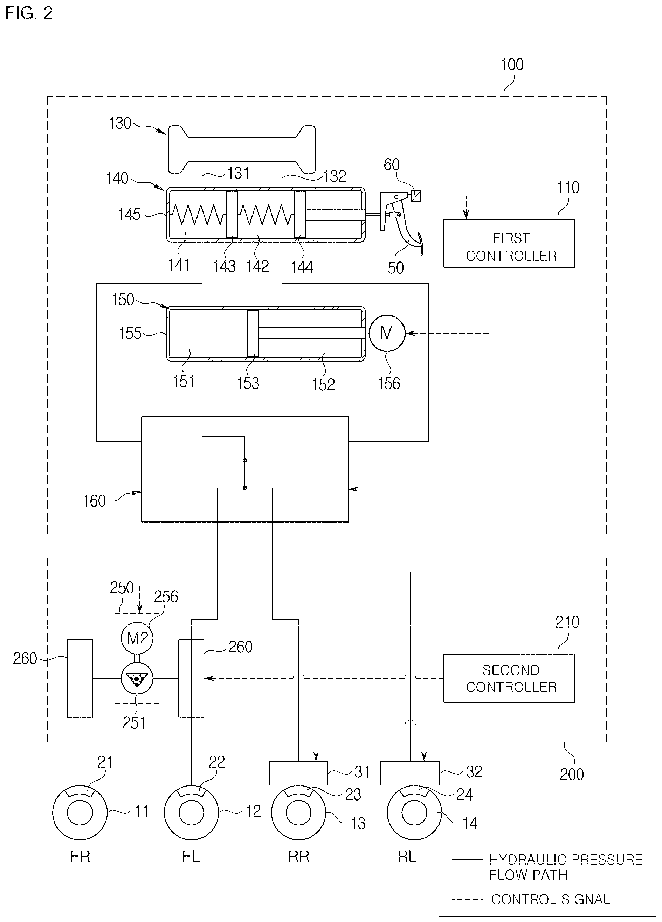

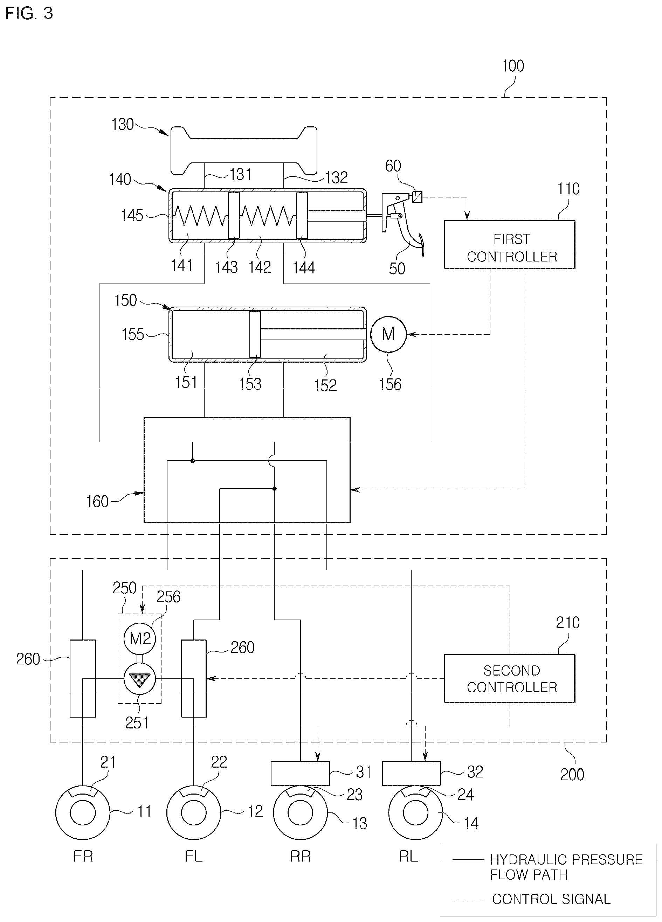

FIGS. 2 and 3 are conceptual diagrams for showing configurations of a brake system according to embodiments of the present invention.

The first hydraulic pressure supply device 100 may include a reservoir 130, a master cylinder 140, the first hydraulic pressure supplier 150, a first hydraulic pressure controller 160, and the first controller 110. One or more of the reservoir 130, the master cylinder 140, the first hydraulic pressure supplier 150, the first hydraulic pressure controller 160, and the first controller 110 of FIGS. 2 and 3 may be not essential components of the first hydraulic pressure supply device 100, and may be omitted from the first hydraulic pressure supply device 100.

The reservoir 130 may store a medium such as brake oil. The reservoir 130 may be connected to components to supply or receive the medium. The reservoir 130 may be hydraulically connected to the master cylinder 140 through reservoir flow paths 131 and 132.

The master cylinder 140 may compress and discharge the pressurized medium accommodated therein according to a force generated by the movement of the brake pedal 50. The master cylinder 140 may include a first master chamber 141 and a second master chamber 142 formed by a cylinder block 145. The first master chamber 141 and the second master chamber 142 may be provided with, or divided by, a first master piston 143 and a second master piston 144, respectively.

The first hydraulic pressure supplier 150 may provide hydraulic pressure of the pressurized medium in response to a control signal from the first controller 110.

The first hydraulic pressure supplier 150 may include a cylinder block 155 accommodating the medium, a hydraulic piston 153 configured to move back and forth inside the cylinder block 155, and hydraulic chambers 151 and 152 partitioned by the hydraulic piston 153. One or more of the cylinder block 155, the hydraulic piston 153, and the hydraulic chambers 151 and 152 may be not essential components of the first hydraulic pressure supplier 150, and may be omitted from the first hydraulic pressure supplier 150.

While the hydraulic piston 153 moves back and forth, hydraulic pressure may be generated in the hydraulic chambers 151 and 152. The hydraulic pressure of the hydraulic chambers 151 and 152 may be transferred to the wheel cylinders 21, 22, 23, and 24 via the first hydraulic pressure controller 160.

The first hydraulic pressure supplier 150 may include a first hydraulic chamber 151 located in front of the hydraulic piston 153 (e.g. a left side of the hydraulic piston 153 in FIG. 2), and a second hydraulic chamber 152 located behind the hydraulic piston 153 (e.g. a right side of the hydraulic piston 153 in FIG. 2).

The first hydraulic chamber 151 may be defined by the cylinder block 155 and one surface (for example, a front surface) of the hydraulic piston 153, and a volume of the first hydraulic chamber 151 may be changed according to a movement of the hydraulic piston 153. Also, the second hydraulic chamber 152 may be defined by the cylinder block 155 and another surface (for instance, a rear surface) of the hydraulic piston 153, and a volume of the second hydraulic chamber 152 may be changed according to a movement of the hydraulic piston 153. The first hydraulic chamber 151 and the second hydraulic chamber 152 may be hydraulically connected to the first hydraulic pressure controller 160 by hydraulic pressure flow paths.

The first hydraulic pressure supplier 150 may include a first motor 156 configured to generate or provide torque for moving the hydraulic piston 153. Also, the first hydraulic pressure supplier 150 may further include a power conversion unit that converts rotary torque of the first motor 156 into a translational movement of the hydraulic piston 153.

The first hydraulic pressure contr'ller'160 may be provided between the first hydraulic pressure supplier 150 and the wheel cylinders 21, 22, 23, and 24. The first hydraulic pressure controller 160 may include, for example, a plurality of hydraulic pressure flow paths or hydraulic connections extending from the first hydraulic pressure supplier 150 to the wheel cylinders 21, 22, 23, and 24, and a first valve block in which a plurality of valves configured to selectively allow or block a flow of the pressurized medium through the plurality of hydraulic pressure flow paths are provided.

As shown in FIG. 2, the first hydraulic pressure controller 160 may control the hydraulic pressure flow paths to guide hydraulic pressure generated by the first hydraulic pressure supplier 150 to the wheel cylinders 21, 22, 23, and 24 or to retrieve hydraulic pressure of the wheel cylinders 21, 22, 23, and 24 to the first hydraulic pressure supplier 150.

For example, the first hydraulic pressure controller 160 may control the hydraulic pressure flow paths to guide hydraulic pressure generated by the first hydraulic chamber 151 to the wheel cylinders 21, 22, 23, and 24 while the hydraulic piston 153 moves forward, in response to an increase of a stroke of the brake pedal 50. Also, the first hydraulic pressure controller 160 may control the hydraulic pressure flow paths to guide hydraulic pressure generated by the second hydraulic chamber 151 to the wheel cylinders 21, 22, 23, and 24 while the hydraulic piston 153 moves forward and then moves backward.

Also, the first hydraulic pressure controller 160 may control the hydraulic pressure flow paths to retrieve hydraulic pressure of the wheel cylinders 21, 22, 23, and 24 to the first hydraulic chamber 151 while the hydraulic piston 153 moves backward, in response to a decrease of a stroke of the brake pedal 50. Also, the first hydraulic pressure controller 160 may control the hydraulic pressure flow paths to retrieve hydraulic pressure of the wheel cylinders 21, 22, 23, and 24 to the second hydraulic pressure chamber 152 while the hydraulic piston 153 moves forward and then moves backward.

As shown in FIG. 3, when a failure in the first hydraulic pressure supplier 150, such as a disabled state of the first hydraulic pressure supplier 150, occurs, the first hydraulic pressure controller 160 may control the hydraulic pressure flow paths to guide hydraulic pressure generated by the master cylinder 140 to the wheel cylinders 21, 22, 23, and 24 or to retrieve hydraulic pressure of the wheel cylinders 21, 22, 23, and 24 to the master cylinder 140.

For example, in response to a failure state (e.g. a disabled state) of the first hydraulic pressure supplier 150, the first hydraulic pressure controller 160 may control the hydraulic pressure flow paths to guide hydraulic pressure generated in the first master chamber 141 to the first and second wheel cylinders 21 and 22 while the first master piston 143 moves forward, and to guide hydraulic pressure generated in the second master chamber 142 to the third and fourth wheel cylinders 23 and 24 while the second master piston 144 moves forward.

Hereinafter, a state in which the master cylinder 140 is hydraulically connected to the wheel cylinders 11, 21, 31, and 41 due to occurrence of a failure or abnormality in the first hydraulic pressure supplier 150 is referred to as a fallback mode.

Also, when no power is supplied to the first hydraulic pressure supply device 100 or when a failure or abnormality (e.g. a disabled state) of the first hydraulic pressure supply device 100 occurs, a flow path for guiding hydraulic pressure generated by the master cylinder 140 to the wheel cylinders 21, 22, 23, and 24 may be formed in or by the first hydraulic pressure controller 160.

As such, in both a case in which a failure is generated in the first hydraulic pressure supplier 150 and a case in which a failure is generated in the first hydraulic pressure supply device 100, the brake system may operate in the fallback mode.

The first controller 110 may include a plurality of semiconductor devices, and may be, for instance, an Electronic Control Unit (ECU). The first controller 110 may include, for example, a plurality of processors and/or a plurality of memories as described above.

The first controller 110 may receive a pedal signal representing a user's intention to brake from a pedal sensor 60. The pedal sensor 60 may detect a movement of the brake pedal 50 configured to be movable by a user's intention to brake by pressing the brake pedal 50 by the driver, and output an electrical signal (e.g. the pedal signal) depending on a movement distance and/or movement velocity of the brake pedal 50. The first controller 110 may provide an electrical signal for supplying hydraulic pressure to the wheel cylinders 21, 22, 23, and 24 or retrieving hydraulic pressure from the wheel cylinders 21, 22, 23, and 24 to the first hydraulic pressure supplier 150 and the first hydraulic pressure controller 160, in response to the pedal signal.

The first controller 110 may transmit and receive data to and from the second controller 210. For example, the first controller 110 may transmit and receive data to and from the second controller 210 through an in-vehicle communication network or through a data line directly connected to the second controller 210.

In a normal state, the first controller 110 may transmit an electrical signal to the second controller 210 periodically. However, in a failure state, the first controller 110 cannot transmit a periodic signal to the second controller 210 or the second controller 210 may not receive the periodic signal from the first controll23 110.

The second hydraulic pressure supply device 200 may be provided on flow paths between the first and second wheel cylinders 21 and 22 and the first hydraulic pressure supply device 100.

The second hydraulic pressure supply device 200 may include a second hydraulic pressure supplier 250, a second hydraulic pressure controller 260, and the second controller 210. One or more of the second hydraulic pressure supplier 250, the second hydraulic pressure controller 260, and the second controller 210, as shown in FIGS. 2 and 3, may be not essential components of the second hydraulic pressure supply device 200, and may be omitted from the second hydraulic pressure supply device 200.

The second hydraulic pressure supplier 250 may provide hydraulic pressure of the pressurized medium in response to a control signal from the second controller 210.

The second hydraulic pressure supplier 250 may include a pump 251 configured to rotate and pump the pressurized medium, and a second motor 256 configured to generate or provide torque for driving the pump 251.

The second hydraulic pressure controller 260 may be provided between the first and second hydraulic pressure suppliers 150 and 250 and the first and second wheel cylinders 21 and 22. The second hydraulic pressure controller 260 may include, for example, a plurality of hydraulic pressure flow paths extending from the second hydraulic pressure controller 260 to the first and second wheel cylinders 21 and 22, and a second valve block in which a plurality of valves configured to selectively allow or block a flow of the pressurized medium through the plurality of hydraulic pressure flow paths are provided.

The second hydraulic pressure controller 260 may selectively open or close a hydraulic pressure flow path between the first hydraulic pressure supplier 150 and the first and second wheel cylinders 21 and 22. For example, while the first hydraulic pressure supplier 150 is in a normal state, the second hydraulic pressure controller 260 may open the hydraulic pressure flow path between the first hydraulic pressure supplier 150 and the first and second wheel cylinders 21 and 22 to hydraulically connect between the first hydraulic pressure supplier 150 and the first and second wheel cylinders 21 and 22, as shown in FIG. 2. Also, while the first hydraulic pressure supplier 150 is in a failure state, the second hydraulic pressure controller 260 may close the hydraulic pressure flow path between the first hydraulic pressure supplier 150 and the first and second wheel cylinders 21 and 22 to block the hydraulic connection between the first hydraulic pressure supplier 150 and the first and second wheel cylinders 21 and 22, as shown in FIG. 3.

Also, while the first hydraulic pressure supplier 150 is in the failure state, the second hydraulic pressure controller 260 may control the hydraulic pressure flow path to guide hydraulic pressure generated by the second hydraulic pressure supplier 250 to the first and second wheel cylinders 21 and 22 or to retrieve hydraulic pressure of the first and second wheel cylinders 21 and 22 to the reservoir 130, as shown in FIG. 3.

For example, in response to an increase of a stroke of the brake pedal 50, the second hydraulic pressure controller 260 may control or form the hydraulic pressure flow path to guide hydraulic pressure provided from the pump 251 to the first and second wheel cylinders 21 and 22. Also, in response to a decrease of a stroke of the brake pedal 50, the second hydraulic pressure controller 160 may control or form the hydraulic pressure flow path to retrieve hydraulic pressure of the first and second wheel cylinders 21 and 22 to the reservoir 130.

The second controller 210 may include a plurality of semiconductor devices, and may be, for example, but not limited to, an ECU. The second controller 210 may include, for example, a plurality of processors and/or a plurality of memories as described above.

The second controller 210 may transmit and receive data to and from the first controller 110. For example, the second controller 210 may transmit and receive data to and from the first controller 110 through an in-vehicle communication network or through a data line directly connected to the first controller 110.

The second controller 210 may receive an electrical signal periodically from the first controller 110 while the first controller 110 is in the normal state. The second controller 210 may identify the normal state of the first controller 110 based on a periodic signal from the first controller 110. Meanwhile, the second controller 210 may identify a failure state of the first controller 110 based on identification that no electrical signal has been received from the first controller 110 for a predetermined time period.

While the first controller 110 is in a failure state, the second controller 210 may receive a pedal signal representing a user's intention to brake from the pedal sensor 60. The second controller 210 may provide an electrical signal for controlling to supply hydraulic pressure to the first and second wheel cylinders 21 and 22 to the second hydraulic pressure supplier 250 and the second hydraulic pressure controller 260 to brake the first and second wheels 11 and 12, in response to the pedal signal. Also, the second controller 210 may provide an electrical signal for braking the third and fourth wheels 13 and 14 to the first and second parking brakes 31 and 32 to brake the third and fourth wheels 13 and 14, in response to the pedal signal.

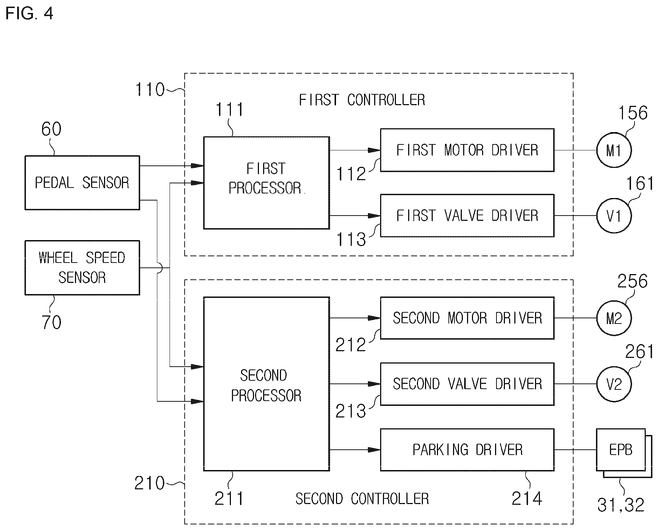

FIG. 4 is a block diagram for showing a configuration of first and second controllers included in a brake system according to an embodiment of the present invention.

Referring to FIG. 4, the vehicle 1 may include the pedal sensor 60, a wheel speed sensor 70, the parking brakes 31 and 32, the first hydraulic pressure supply device 100, and the second hydraulic pressure supply device 200. The first hydraulic pressure supply device 100 may include the first motor 156, a first valve block 161, and the first controller 110. Also, the second hydraulic pressure supply device 200 may include the second motor 256, a second valve block 261, and the second controller 210. Herein, one or more of the first motor 156, the first valve block 161, and the first controller 110 may be not essential components of the first hydraulic pressure supply device 100, and may be omitted from the first hydraulic pressure supply device 100. Also, one or more of the second motor 256, the second valve block 261, and the second controller 210 may be not essential components of the second hydraulic pressure supply device 200, and may be omitted from the second hydraulic pressure supply device 200.

The pedal sensor 60 may detect a movement of the brake pedal 50 configured to be movable by a user's intention to brake by pressing the brake pedal 50 by the driver, and output an electrical signal (i.e. a pedal signal) representing a movement distance and/or movement velocity of the brake pedal 50 to the first controller 110 and the second controller 210.

The pedal sensor 60 may include a first pedal sensor and a second pedal sensor. Each of the first pedal sensor and the second pedal sensor may detect a movement distance and/or movement velocity of the brake pedal 50, and provide electrical signals (i.e. a first pedal signal and a second pedal signal) representing the detected movement distance and/or movement velocity to the first controller 110 and the second controller 210. The power for the first pedal sensor may be supplied from a different power source (for example, a different battery or a different power network) from power source of the second pedal sensor. For example, the first pedal sensor may obtain power from a first battery or a first power network through the first hydraulic pressure supply device 100, and the second pedal sensor may obtain power from a second battery or a second power network through the second hydraulic pressure supply device 200. Thereby, although a failure, such as power cut-off or a disabled state, occurs in any one pedal sensor of the first pedal sensor and the second pedal sensor, the first controller 110 and the second controller 210 may obtain a pedal signal from the other remaining pedal sensor, and be capable of identifying a driver's intention to brake.

The wheel speed sensor 70 may detect rotations of the wheels 11, 12, 13, and 14 according to driving of the vehicle 1, and provide an electrical signal (i.e., an wheel speed signal) corresponding to rotation speed of the wheels 11, 12, 13, and 14 to the first controller 110 and the second controller 210.

The wheel speed sensor 70 may be provided in each of the wheels 11, 12, 13, and 14, unlike the pedal sensor 60. For example, each of four wheel speed sensors respectively provided in the four wheels 11, 12, 13, and 14 may provide a wheel speed signal to the first controller 110 and the second controller 210. For example, while the first hydraulic pressure supply device 100 is in a failure state, the wheel speed sensor 70 may obtain power from the second hydraulic pressure supply device 200 and provide a wheel speed signal to the second controller 210 of the second hydraulic pressure supply device 200. Also, while the first hydraulic pressure supply device 100 is in the normal state, the wheel speed sensor 70 may obtain power from the first hydraulic pressure supply device 100 and provide a wheel speed signal to the first controller 110 of the first hydraulic pressure supply device 100.

The parking brakes 31 and 32 may be provided in some of the wheels 11, 12, 13, and 14 and brake rotations of the wheels 11, 12, 13, and 14. For example, the parking brakes 31 and 32 may be provided in the third wheel 13 and the fourth wheel 14 and brake rotations of the third wheel 13 and the fourth wheel 14. Each of the parking brakes 31 and 32 may include a motor, and rotary torque provided by the motor provided in each of the parking brakes 31 and 32 may be converted into a translational movement by the spindle to move the brake pads toward the disc.

The first motor 156 may provide power (e.g. torque) for generating hydraulic pressure of the pressurized medium to the cylinder block 155 and the hydraulic piston 153. The hydraulic piston 153 may be moved translationally according to the torque provided by the first motor 156.

The first valve block 161 may control the flow path of the medium, extending from the first hydraulic pressure supplier 150 to the wheel cylinders 21, 22, 23, and 24. The first valve block 161 may include, for example, but not limited to, a plurality of solenoid valves provided on the flow path of the medium.

The first controller 110 may provide an electrical signal for providing hydraulic pressure of the pressurized medium to the wheel cylinders 21, 22, 23, and 24 in response to the user's intention to brake by the brake pedal 50 and the rotation speed of the wheels 11, 12, 13, and 14.

The first controller 110 may include a first motor driver 112, a first valve driver 113, and a first processor 111. One or more of the first motor driver 112, the first valve driver 113, and the first processor 111 may be not essential components of the first controller 110, and may be omitted from the first controller 110.

The first motor driver 112 may receive a control signal from the first processor 111, and provide driving current for driving the first motor 156 of the first hydraulic pressure supplier 150 in response to the control signal from the first processor 111. For example, the first motor driver 112 may provide, in response to the control signal from the first processor 111, driving current for moving the hydraulic piston 153 in a forward direction to the first motor 156 or driving current for moving the hydraulic piston 153 in a backward direction to the first motor 156. The first motor driver 112 may include, for instance, but not limited to, an inverter circuit for controlling the driving current of the first motor 156, a gate driver for driving an input terminal of the inverter circuit, etc.

The first valve driver 113 may receive a control signal from the first processor 111, and provide driving current for driving the first valve block 161 of the first hydraulic pressure controller 160 in response to the control signal from the first processor 111. For example, the first valve driver 113 may provide, in response to the control signal from the first processor 111, driving current to the valves to form flow paths from the first hydraulic chamber 151 of the first hydraulic pressure supplier 150 to the wheel cylinders 21, 22, 23, and 24, or the first valve driver 113 may provide, in response to the control signal from the first processor 111, driving current to the valves to form flow paths from the second hydraulic chamber 152 of the first hydraulic pressure supplier 150 to the wheel cylinders 21, 22, 23, and 24.

The first processor 111 may process output signals of the pedal sensor 60 and the wheel speed sensor 70 and control the first hydraulic pressure supply device 100 based on the processed results of the output signals of the pedal sensor 60 and the wheel speed sensor 70.

The first processor 111 may control the first motor driver 112 and/or the first valve driver 113 to drive the first motor 156 and/or the first valve block 161, based on the pedal signal from the pedal sensor 60. For example, the first processor 210 may receive the pedal signal representing an increase or decrease of the stroke of the brake pedal 50 from the pedal sensor 60, and provide a control signal for controlling the first motor 156 and/or the first valve block 161 to the first motor driver 112 and/or the first valve driver 113 based on the received pedal signal. Accordingly, the first hydraulic pressure supply device 100 may be implemented for performing operations of a service brake.

The first processor 111 may control the first motor driver 112 and/or the first valve driver 113 to drive the first motor 156 and/or the first valve block 161 based on a wheel speed signal of the wheel speed sensor 70. For example, the first processor 111 may receive a wheel speed signal representing the rotation speed of the wheels 11, 12, 13, and 14 from the wheel speed sensor 70, and provide a control signal for controlling the first motor 156 and/or the first valve block 161 to the first motor driver 112 and/or the first valve driver 113, based on the wheel speed signal. Thereby, the first hydraulic pressure supply device 100 may be implemented for performing operations of an Anti-lock Brake System (ABS).

The first processor 111 may include a semiconductor device or a plurality of semiconductors. The first processor 111 may include a core or a plurality of cores inside the semiconductor device. Also, the first processor 111 may be for example, but not limited to, a Micro Controller Unit (MCU).

Also, the first processor 111 may include a memory configured to memorize and/or store programs and data for performing operations of braking the vehicle based on the driver's intention to brake and/or the rotation speed of the wheels 11, 12, 13, and 14. The memory may provide the programs and data to the first processor 111, and memorize temporary data generated during calculation operations of the first processor 111. The memory may include, for example, but not limited to, a volatile memory, such as Static Random Access Memory (S-RAM) and Dynamic Random Access Memory (D-RAM), and a non-volatile memory, such as Erasable Programmable Read Only Memory (EPROM) and flash memory.

The second motor 256 may provide power (e.g. torque) for generating hydraulic pressure of the pressurized medium to the pump 251. The pump 251 may pump the pressurized medium by the torque provided by the second motor 256.

The second valve block 261 may control the flow path of the pressurizing medium, extending from the first hydraulic pressure supplier 150 to the first and second wheel cylinders 21 and 22, and the flow path of the medium, extending from the second hydraulic pressure supplier 250 to the first and second wheel cylinders 21 and 22. The second valve block 261 may include, for example, but not limited to, a plurality of solenoid valves provided on the flow paths of the pressurizing medium.

The second controller 210 may provide, in response to the user's intention to brake by the brake pedal 50 and the rotation speed of the wheels 11, 12, 13, and 14, an electrical signal for providing (or retrieving) hydraulic pressure of the pressurizing medium or an electrical signal for applying (or releasing) the parking brakes 31 and 32 to the first and second wheel cylinders 21 and 22.

The second controller 210 may include a second motor driver 212, a second valve driver 213, a parking driver 214, and a second processor 211. One or more of the second motor driver 212, the second valve driver 213, the parking driver 214, and the second processor 211 may be not essential components of the second controller 210, and may be omitted from the second controller 210.

The second motor driver 212 may receive a control signal from the second processor 211, and provide driving current for driving the second motor 256 of the second hydraulic pressure supplier 250 in response to the control signal from the second processor 211. For example, the second motor driver 212 may provide driving current for causing the pump 251 to pump the pressurized medium to the second motor 256, in response to the control signal from the second processor 211. The second motor driver 212 may include, for example, but not limited to, a H bridge circuit for controlling driving current of the second motor 256 and a gate driver for driving an input terminal of the H bridge circuit.

The second valve driver 213 may receive a control signal from the second processor 211, and provide driving current for driving the second valve block 261 of the second hydraulic pressure controller 260 in response to the control signal from the second processor 211. For example, in response to the control signal from the second processor 211, the second valve driver 213 may provide driving current to valves to form a flow path from the pump 251 of the second hydraulic pressure supplier 250 to the first and second wheel cylinders 21 and 22, or the second valve driver 213 may provide driving current to the valves to block the flow path from the hydraulic pressure supplier 150 to the first and second wheel cylinders 21 and 22.

The parking driver 214 may receive a parking brake applying or releasing signal from the second processor 211, and provide driving current for applying the parking brakes 31 and 32 to the parking brakes 31 and 32 in response to the parking brake applying signal. For example, the parking driver 214 may provide, in response to a control signal, driving current for restricting or releasing rotations of the third and fourth wheels 13 and 14 to the parking brakes 31 and 32. The parking driver 214 may include, for instance, but not limited to, a H bridge circuit for controlling driving current of the parking brakes 31 and 32 and a gate driver for driving an input terminal of the H bridge circuit.

The second processor 211 may process output signals of the pedal sensor 60 and the wheel speed sensor 70, and control the second hydraulic pressure supplier 200 and the parking brakes 31 and 32 based on the processed results of the output signals of the pedal sensor 60 and the wheel speed sensor 70.

The second processor 211 may transmit and receive data and/or signals to and from the first processor 111 through various communication paths. For example, the second processor 211 may transmit and receive data and/or signals to and from the first processor 111 through a signal line connected to the first processor 111, or transmit and receive data and/or signals to and from the first processor 111 through an in-vehicle communication network.

The second processor 211 may transmit and receive data and/or signals to/ and rom the first processor 111. For example, in the normal state, the first processor 111 may transmit an electrical signal (for example, a pulse signal) periodically to the second processor 211.

The second processor 211 may receive a periodic signal (for example, a pulse signal) from the first processor 111, and control to deactivate the second hydraulic pressure supply device 200 while receiving the periodic signal from the first processor 111. For example, while the second processor 211 receives the periodic signal from the first processor 111, the second processor 211 may control the second motor driver 212 not to drive the second motor 256 or to deactivate the second motor 256. While the second processor 211 receives the periodic signal from the first processor 111, the second processor 211 may control the second valve driver 213 to enable the second valve block 261 to allow or form the flow path between the first hydraulic pressure supply device 100 and the first and second wheel cylinders 21 and 22.

The second processor 211 may be activated based on identification that no periodic signal (e.g. a pulse signal) has been received from the first processor 11 for a predetermined time period. While no periodic signal is received by the second processor 211 from the first processor 111, the second processor 211 may identify that the first processor 111 is not in the normal state (in other words, the first processor 111 is in a failure state), and be activated to perform or take over at least some of functions of the first processor 111.

While the first hydraulic pressure supply device 100 is in a failure state, based on the pedal signal from the pedal sensor 60, the second processor 211 may control the second motor 256, the second valve block 261 and/or the parking brakes 31 and 32 to drive the second motor 256, the second valve block 261 and/or the parking brakes 31 and 32. For example, the second processor 211 may receive a pedal signal representing an increase or decrease of the stroke of the brake pedal 50 from the pedal sensor 60, and transmit or provide a control signal for controlling the second motor 256, the second valve block 261 and/or the parking brakes 31 and 32 to the second motor driver 212, the second valve driver 213 and/or the parking driver 214 based on the pedal signal. Thereby, the second hydraulic pressure supply device 200 may be implemented for performing operations of a service brake while the first hydraulic pressure supply device 100 is in the failure state.

The second processor 211 may control the second motor driver 212, the first valve driver 113, and/or the parking driver 214 to drive the second motor 256, the second valve block 261 and/or the parking brakes 31 and 32, based on the wheel speed signal from the wheel speed sensor 70, while the first hydraulic pressure supply device 100 is in the failure state. For example, the second processor 211 may receive a wheel speed signal representing rotation speed of the wheels 11, 12, 13, and 14 from the wheel speed sensor 70, and provide a control signal for controlling the second motor 256, the second valve block 261 and/or the parking brakes 31 and 32 to the second motor driver 212, the second valve driver 213 and/or the parking driver 214, based on the wheel speed signal. Thereby, the first hydraulic pressure supply device 100 may be implemented for performing operations of the ABS while the first hydraulic pressure supply device 100 is in the failure state.

When the second processor 211 is in a normal operation, the second processor 211 may transmit a periodic signal (for example, a pulse signal) to the first processor 111. The first processor 111 may identify whether or not the second processor 211 is in the normal state based on the identification of whether or not a periodic signal of the second processor 211 is received.

The second processor 211 may include a semiconductor device or a plurality of semiconductors. The second processor 211 may include a core or a plurality of cores inside the semiconductor device. Also, the second processor 211 may be , for example, but not limited to, MCU.

Also, the second processor 211 may include a memory configured to memorize and/or store programs and data for braking the vehicle based on the user's intention to brake and/or the rotation speed of the wheels 11, 12, 13, and 14. The memory may provide the programs and data to the second processor 211, and memorize temporary data generated during calculation operations of the second processor 211. The memory may include, for example, but not limited to, a volatile memory, such as S-RAM and D-RAM, and a non-volatile memory, such as EPROM and flash memory.

As described above, the brake system of the vehicle 1 may include the first hydraulic pressure supply device 100, and the first hydraulic pressure supply device 100 may brake the vehicle 1 in response to the driver's intention to brake and the driver's intention to park. Also, the brake system of the vehicle 1 may further include the second hydraulic pressure supply device 200 to provide redundancy. While the first hydraulic pressure supply device 100 is in a failure state, the second hydraulic pressure supply device 100 may brake the vehicle 1 in response to the driver's intention to brake and/or the driver's parking command. Thereby, the brake system may brake the vehicle 1 by an operation of the second hydraulic pressure supply device 200 even when the first hydraulic pressure supply device 100 does not operate normally.

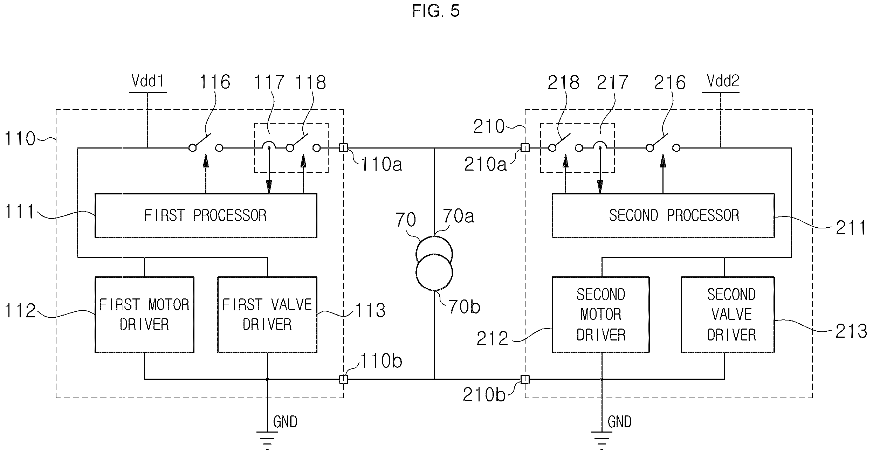

FIG. 5 is a block diagram for showing connections between a first controller, a second controller, and a wheel speed sensor included in a brake system according to an embodiment of the present invention.

The brake system of the vehicle 1 may include the wheel speed sensor 70, the first controller 110, and the second controller 210. As shown in FIG. 5, the first controller 110 and the second controller 210 may be connected in parallel to each other with respect to the wheel speed sensor 70.

The wheel speed sensor 70 may provide a wheel speed signal corresponding to the rotation speed of the wheels 11, 12, 13, and 14 to the first controller 110 and the second controller 210, as described above with reference to FIG. 4.

For example, the wheel speed sensor 70 may include a hall sensor of which current changes according to a magnetic field. The hall sensor may be provided around a tone wheel (e.g. a pulse ring) rotating together with the wheels 11, 12, 13, and 14, and current of the hall sensor may change depending on a change of a magnetic field according to a rotation of the tone wheel (e.g. a pulse ring). For example, a distance between the tone wheel (e.g. a pulse ring) and the hall sensor may change periodically according to the rotation of the tone wheel (e.g. a pulse ring). The current of the hall sensor may become maximum at a minimum distance between the tone wheel (e.g. a pulse ring) and the hall sensor, and the current of the hall sensor may become minimum at a maximum distance between the tone wheel (e.g. a pulse ring) and the hall sensor. Accordingly, a current value of the hall sensor may change periodically according to a rotation of the tone wheel (e.g. a pulse ring).

The first controller 110 may include the first motor driver 112, the first valve driver 113, a first switch 116, a first current sensor 117, a third switch 118, and the first processor 111. One or more of the first motor driver 112, the first valve driver 113, the first switch 116, the first current sensor 117, the third switch 118, and the first processor 111 may be not essential components of the first controller 110, and may be omitted from the first controller 110.

The above descriptions about the first motor driver and the first valve driver, given together with FIG. 4 may substitute for descriptions about the first motor driver 112 and the first valve driver 113.

The first controller 110 may obtain power from a first power source Vdd1. Current provided from the first power source Vdd1 may flow to a common ground GND via the first controller 110.

The first controller 110 may include a pair of first terminals 110a and 110b respectively connected to both terminals of the wheel speed sensor 70. A positive first terminal 110a of the first controller 110 may be connected to a power terminal 70a of the wheel speed sensor 70. A negative first terminal 110b of the first controller 110 may be connected to a signal terminal 70b of the wheel speed sensor 70. The positive first terminal 110a may be connected to the first power source Vdd1, and a first switch 116, a first current sensor 117, and a third switch 118 may be provided on a line connecting the positive first terminal 110a to the first power source Vdd1. The negative first terminal 110b may be connected to the common ground GND.

In other words, the first switch 116, the first current sensor 117, the third switch 118, and the wheel speed sensor 70 may be connected in series to each other between the first power source Vdd1 and the common ground GND. Also, current provided from the first power source Vdd1 may be supplied to the wheel speed sensor 70 via the first switch 116, the first current sensor 117, and the third switch 118.

The first switch 116 may be provided on a conductive line between the first power source Vdd1 and the wheel speed sensor 70, and may be configured to selectively allow or block an electrical connection between the first power source Vdd1 and the wheel speed sensor 70 in response to a control signal from the first processor 111.

The first processor 111 may provide a signal (e.g. an on signal) for maintaining an closed state (e.g. an on state) of the first switch 116 to the first switch 116 while the first hydraulic pressure supply device 100 is in the normal state. Accordingly, the first switch 116 may be maintained in the closed state (e.g. an on state) while the first hydraulic pressure supply device 100 is in the normal state, and allow current supply from the first power source Vdd1 to the wheel speed sensor 70.

The first processor 111 may provide a signal (e.g. an off signal) for opening (e.g. turning off) the first switch 116 to the first switch 116 while the first hydraulic pressure supply device 100 is in a failure state. Accordingly, the first switch 116 may be maintained in the open state (e.g. an off state) while the first hydraulic pressure supply device 100 is in the failure state, and block current supply from the first power source Vdd1 to the wheel speed sensor 70. Also, the first switch 116 may be open (e.g. turned off) while no control signal is received from the first processor 111, for instance, due to a failure of the first processor 111.

The first current sensor 117 may detect current provided from the first power source Vdd1 to the wheel speed sensor 70, and provide an electrical signal (hereinafter, referred to as a 'first current signal') corresponding to a value of the detected current to the first processor 110.

As described above, the current of the wheel speed sensor 70 may change depending on rotations of the tone wheel (pulse ring), that is, rotations of the wheels 11, 12, 13, and 14. Accordingly, the current provided from the first power source Vdd1 to the wheel speed sensor 70 may change depending on the rotations of the wheels 11, 12, 13, and 14.

Thereby, the first current sensor 117 may detect the current of the wheel speed sensor 70 which is changed depending on the rotations of the wheels 11, 12, 13, and 14 while the first switch 116 is closed (e.g. turned on), and provide a first current signal to the first processor 111. The first processor 111 may identify or calculate the rotations of the wheels 11, 12, 13, and 14 and the rotation speed of the wheels 11, 12, 13, and 14 based on the first current signal of the first current sensor 117.

The third switch 118 may be provided on the conductive line between the first power source Vdd1 and the wheel speed sensor 70, and be configured to selectively allow or block an electrical connection between the first power source Vdd1 and the wheel speed sensor 70 in response to a control signal from the first processor 111. The first processor 111 may provide a signal (e.g. an on signal) for maintaining a closed state (e.g. an on state) of the third switch 118 to the third switch 118 while the first hydraulic pressure supply device 100 is in the normal state, and provide a signal (e.g. an off signal) for opening (e.g. turning off) the third switch 118 to the third switch 118 while the first hydraulic pressure supply device 100 is in the failure state.

The third switch 118 may be integrated into the first current sensor 117. For example, the third switch 118 may be implemented as a power transistor, and the first current sensor 117 may measure a value of a current of the third switch 118, copied by a current mirror circuit.

The second controller 210 may include the second motor driver 212, the second valve driver 213, a second switch 216, a second current sensor 217, a fourth switch 218, and the second processor 211. One or more of the second motor driver 212, the second valve driver 213, the second switch 216, the second current sensor 217, the fourth switch 218, and the second processor 211 may be not essential components of the second controller 210, and may be omitted from the second controller 210.

The above descriptions about the second motor driver and the second valve driver, given together with FIG. 4 may substitute for descriptions about the second motor driver 212 and the second valve driver 213.

The second controller 210 may obtain power from a second power source Vdd2. Current provided from the second power source Vdd2 may flow to the common ground GND via the second controller 210.

The second controller 210 may include a pair of second terminals 210a and 210b respectively connected to both terminals of the wheel speed sensor 70. A positive second terminal 210a of the second controller 210 may be connected to the power terminal 70a of the wheel speed sensor 70. A negative second terminal 210b of the second controller 210 may be connected to the signal terminal 70b of the wheel speed sensor 70. The positive second terminal 210a may be connected to the second power source Vdd2, and the second switch 216, the second current sensor 217, and the fourth switch 218 may be provided on a line connecting the positive second terminal 210a to the second power source Vdd2. The negative second terminal 210b may be connected to the common ground GND.

In other words, the second switch 216, the second current sensor 217, the fourth switch 218, and the wheel speed sensor 70 may be connected in series to each other between the second power source Vdd2 and the common ground GND. Also, current provided from the second power source Vdd2 may be supplied to the wheel speed sensor 70 via the second switch 216, the second current sensor 217, and the fourth switch 218.

The second switch 216 may be provid"d on'a conductive line between the second power source Vdd2 and the wheel speed sensor 70, and may be configured to selectively allow or block an electrical connection between the second power source Vdd2 and the wheel speed sensor 70 in response to a control signal from the second processor 211.

The second processor 211 may provide a signal (e.g. an on signal) for maintaining a closed state (e.g. an on state) of the second switch 216 to the second switch 216 while the first hydraulic pressure supply device 100 is in a failure state. Accordingly, the second switch 216 may be maintained in the closed state (e.g. an on state) while the first hydraulic pressure supply device 100 is in the failure state, and allow current supply from the second power source Vdd2 to the wheel speed sensor 70.

The second processor 211 may provide a signal (e.g. an off signal) for opening (e.g. turning off) the second switch 216 to the second switch 216 while the first hydraulic pressure supply device 100 is in the normal state. Accordingly, the second switch 216 may be maintained in the open state (e.g. an off state) while the first hydraulic pressure supply device 100 is in the normal state, and block current supply from the second power source Vdd2 to the wheel speed sensor 70. Also, the second switch 216 may be open (e.g. turned off) while no control signal is received from the second processor 211, for example, due to a failure of the second processor 211.

The second current sensor 217 may detect current provided from the second power source Vdd2 to the wheel speed sensor 70, and provide an electrical signal (hereinafter, referred to as a 'second current signal') corresponding to a value of the detected current to the second processor 211.

The second current sensor 217 may detect the current of the wheel speed sensor 70 changing depending on rotations of the wheels 11, 12, 13, and 14 while the second switch 216 is in the closed state (e.g. an on state), and provide a second current signal to the second processor 211. The second processor 211 may identify or calculate rotations of the wheels 11, 12, 13, and 14 and rotation speed of the wheels 11, 12, 13, and 14 based on the second current signal from the second current sensor 217.

The fourth switch 218 may be provided on the conductive line between the second power source Vdd2 and the wheel speed sensor 70, and may be configured to selectively allow or block an electrical connection between the second power source Vdd2 and the wheel speed sensor 70 in response to a control signal from the second processor 211. The second processor 211 may provide a signal (e.g. an on signal) for maintaining a closed state (e.g. an on state) of the fourth switch 218 to the fourth switch 218 while the first hydraulic pressure supply device 100 is in a failure state, and provide a signal (e.g. an off signal) for opening (e.g. turning off) the fourth switch 218 to the fourth switch 218 while the first hydraulic pressure supply device 100 is in the normal state.

The fourth switch 218 may be integrated into the second current sensor 217. For example, the fourth switch 218 may be implemented as a power transistor, and the second current sensor 217 may measure a value of a current of the fourth switch 218, copied by a current mirror circuit.

As described above, the first hydraulic pressure supply device 100 may share the wheel speed sensor 70 provided in each of the wheels 11, 12, 13, and 14 with the second hydraulic pressure supply device 200. While the first hydraulic pressure supply device 100 is in the normal state, the wheel speed sensor 70 may obtain power from the first power source Vdd1 via the first hydraulic pressure supply device 100, and provide a wheel speed signal to the first processor 111 of the first hydraulic pressure supply device 100. However, while the first hydraulic pressure supply device 100 is in a failure state, the wheel speed sensor 70 may obtain power from the second power source Vdd2 via the second hydraulic pressure supply device 200, and provide a wheel speed signal to the second processor 211 of the second hydraulic pressure supply device 200.

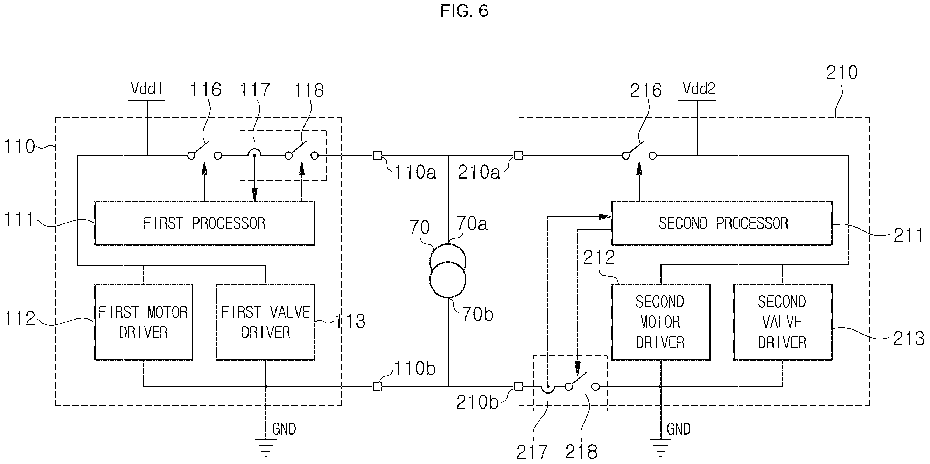

FIG. 6 is a block diagram for showing connections between a first controller, a second controller, and a wheel speed sensor included in a brake system according to an embodiment of the present invention.

A brake system may include the wheel speed sensor 70, the first controller 110, and the second controller 210. As shown in FIG. 6, the first controller 110 and the second controller 210 may be connected in parallel to each other with respect to the wheel speed sensor 70.

The above descriptions about the wheel speed sensor, given together with FIG. 5 may substitute for descriptions about the wheel speed sensor 70.

The first controller 110 may include the first motor driver 112, the first valve driver 113, the first switch 116, the first current sensor 117, the third switch 118, and the first processor 111. One or more of the first motor driver 112, the first valve driver 113, the first switch 116, the first current sensor 117, the third switch 118, and the first processor 111 may be not essential components of the first controller 110, and may be omitted from the first controller 110.

The above descriptions about the first motor driver, the first valve driver, the first switch, the first current sensor, the third switch, and the first processor, and the wheel speed sensor, given together with FIG. 5 may substitute for descriptions about the first motor driver 112, the first valve driver 113, the first switch 116, the first current sensor 117, the third switch 118, and the first processor 111.

The second controller 210 may include the second motor driver 212, the second valve driver 213, the second switch 216, the second current sensor 217, the fourth switch 218, and the second processor 211. One or more of the second motor driver 212, the second valve driver 213, the second switch 216, the second current sensor 217, the fourth switch 218, and the second processor 211 may be not essential components of the second controller 210, and may be omitted from the second controller 210.

The above descriptions about the second motor driver and the second valve driver, given together with FIG. 4 may substitute for descriptions about the second motor driver 212 and the second valve driver 213.

The second controller 210 may obtain power from the second power source Vdd2. The current provided from the second power source Vdd2 may flow to the common ground GND via the second controller 210.

The second controller 210 may include a pair of second terminals 210a and 210b respectively connected to both terminals of the wheel speed sensor 70. The positive second terminal 210a of the second controller 210 may be connected to the power terminal 70a of the wheel speed sensor 70. The negative second terminal 210b of the second controller 210 may be connected to the signal terminal 70b of the wheel speed sensor 70. The positive second terminal 210a may be connected to the second power source Vdd2, and the second switch 216 may be provided on the line connecting the positive second terminal 210a to the second power source Vdd2. The negative second terminal 210b may be connected to the common ground GND, and the second current sensor 217 and the fourth switch 218 may be provided on a line connecting the negative second terminal 210b to the common ground GND.

In other words, the second switch 216, the wheel speed sensor 70, the second current sensor 217, and the fourth switch 218 may be connected in series to each other between the second power source Vdd2 and the common ground GND. Also, the current provided from the second power source Vdd2 may be supplied to the wheel speed sensor 70 via the second switch 216, and flow to the common ground GND via the second current sensor 217 and the fourth switch 218.

The second switch 216 may be provided on the conductive line between the second power source Vdd2 and the wheel speed sensor 70, and be configured to selectively allow or block an electrical connection between the second power source Vdd2 and the wheel speed sensor 70 in response to a control signal from the second processor 211.

The second processor 211 may provide a signal (e.g. an on signal) for maintaining a closed state (e.g. an on state) of the second switch 216 to the second switch 216 while the first hydraulic pressure supply device 100 is in a failure state, and provide a signal (e.g. an off signal) for opening (e.g. turning off) the second switch 216 to the second switch 216 while the first hydraulic pressure supply device 100 is in the normal state.

The second current sensor 217 may be provided between the negative second terminal 210b of the second controller 210 and the common ground GND. The second current sensor 217 may detect current provided from the second power source Vdd2 to the wheel speed sensor 70, and provide an electrical signal (hereinafter, referred to as a 'second current signal') corresponding to a value of the detected current to the second processor 211.

The fourth switch 218 may be connected in series to the second current sensor 217 between the negative second terminal 210b of the second controller 210 and the common ground GND, and be configured to selectively allow or block an electrical connection between the wheel speed sensor 70 and the common ground GND in response to a control signal from the second processor 211. The second processor 211 may provide a signal (e.g. an on signal) for maintaining a closed state (e.g. an on state) of the fourth switch 218 to the fourth switch 218 while the first hydraulic pressure supply device 100 is in a failure state, and provide a signal (e.g. an off signal) for opening (e.g. turning off) the fourth switch 218 to the fourth switch 218 while the first hydraulic pressure supply device 100 is in the normal state.

As described above, the negative first terminal 110b of the first controller 110 may be connected to the signal terminal 70b of the wheel speed sensor 70 and the negative second terminal 210b of the second controller 210, and the fourth switch 218 may be provided between the negative second terminal 210b and the common ground GND.

Thereby, the stability of the first controller 110 and the second controller 210 may be improved. For example, to drive the first motor 156, the first motor driver 112 may supply a large amount of current to the first motor 156, and the large amount of current supplied to the first motor 156 may flow to the common ground GND via the first motor driver 112. At this time, due to the heat emission of the line between the first controller 110 and the common ground GND, the line between the first controller 110 and the common ground GND may be disconnected. Although the line between the first controller 110 and the common ground GND is disconnected, a large amount of current flowing to the common ground GND through a line between the negative first terminal 110b and the negative second terminal 210b can be prevented because the fourth switch 218 is in a turned-off state.

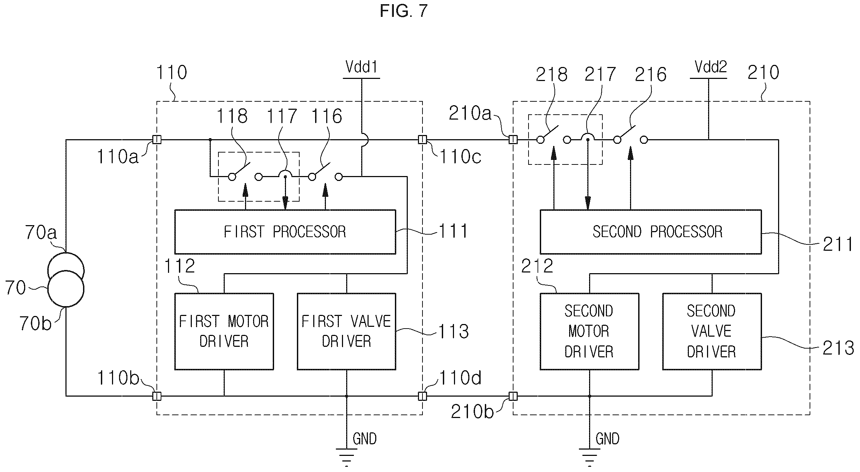

FIG. 7 is a block diagram for showing connections between a first controller, a second controller, and a wheel speed sensor included in a brake system according to an embodiment of the present invention.

A brake system may include the wheel speed sensor 70, the first controller 110, and the second controller 210. As shown in FIG. 7, the first controller 110 may be connected in series to the second controller 210, and the first and second controllers 110 and 210 may be connected in series to the wheel speed sensor 70. The second controller 210 may be connected to the wheel speed sensor 70 via the first controller 110.

The first controller 110 may include the first motor driver 112, the first valve driver 113, the first switch 116, the first current sensor 117, the third switch 118, and the first processor 111. One or more of the first motor driver 112, the first valve driver 113, the first switch 116, the first current sensor 117, the third switch 118, and the first processor 111 may be not essential components of the first controller 110, and may be omitted from the first controller 110.

The above descriptions about the first motor driver and the first valve driver, given together with FIG. 4 may substitute for descriptions about the first motor driver 112 and the first valve driver 113.

The first controller 110 may obtain power from the first power source Vdd1. The current provided from the first power source Vdd1 may flow to the common ground GND via the first controller 110.

The first controller 110 may include the pair of first terminals 110a and 110b respectively connected to both terminals of the wheel speed sensor 70, and a pair of third terminals 110c and 110d respectively connected to a pair of terminals of the second controller 210. The positive first terminal 110a of the first controller 110 may be connected to the power terminal 70a of the wheel speed sensor 70, and the negative first terminal 110b of the first controller 110 may be connected to the signal terminal 70b of the wheel speed sensor 70. A positive third terminal 110c of the first controller 110 may be connected to a positive terminal of the second controller 210, and a negative third terminal 110d of the first controller 110 may be connected to a negative terminal of the second controller 210. The positive first and third terminals 110a and 110c may be connected to the first power source Vdd1, and the first switch 116, the first current sensor 117, and the third switch 118 may be provided on a line connecting the positive first and third terminals 110a and 110c to the first power source Vdd1. The negative first and third terminals 110b and 110d may be connected to the common ground GND.

In other words, the first switch 116, the first current sensor 117, the third switch 118, and the wheel speed sensor 70 may be connected in series to each other between the first power source Vdd1 and the common ground GND. Also, the current provided from the first power source Vdd1 may be supplied to the wheel speed sensor 70 via the first switch 116, the first current sensor 117, and the third switch 118.

The above descriptions about the first switch, the first current sensor, the third switch, and the first processor, given together with FIG. 5 may substitute for descriptions about the first switch 116, the first current sensor 117, the third switch 118, and the first processor 111.

The second controller 210 may include the second motor driver 212, the second valve driver 213, the second switch 216, the second current sensor 217, the fourth switch 218, and the second processor 211. The second motor driver 212, the second valve driver 213, the second switch 216, the second current sensor 217, the fourth switch 218, and the second processor 211 may be not essential components of the first controller 110, and at least some of these may be omitted.

The above descriptions about the second motor driver and the second valve driver, given together with FIG. 4 may substitute for descriptions about the second motor driver 212 and the second valve driver 213.

The second controller 210 may obtain power from the second power source Vdd2. Current provided from the second power source Vdd2 may flow to the common ground GND via the second controller 210.

The second controller 210 may include the pair of second terminals 210a and 210b respectively connected to the pair of third terminals 110c and 110d of the first controller 110. The positive second terminal 210a of the second controller 210 may be connected to the positive third terminal 110c of the first controller 110, and the negative second terminal 210b of the second controller 210 may be connected to the negative third terminal 110d of the first controller 110. The positive second terminal 210a may be connected to the second power source Vdd2, and the second switch 216, the second current 217, and the fourth switch 218 may be provided on the line connecting the positive second terminal 210a to the second power source Vdd2. The negative second terminal 210b may be connected to the common ground GND.

In other words, the second switch 216, the second current sensor 217, the fourth switch 218, the wheel speed sensor 70, and the first controller 110 may be connected in series to each other between the second power source Vdd2 and the common ground GND. Also, the current provided from the second power source Vdd2 may be supplied to the wheel speed sensor 70 via the second switch 216, the second current sensor 217, the fourth switch 218, and the first controller 110.

The above descriptions about the second switch, the second current sensor, the fourth switch, and the second processor, given together with FIG. 5 may substitute for descriptions about the second switch 216, the second current sensor 217, the fourth switch 218, and the second processor 211.

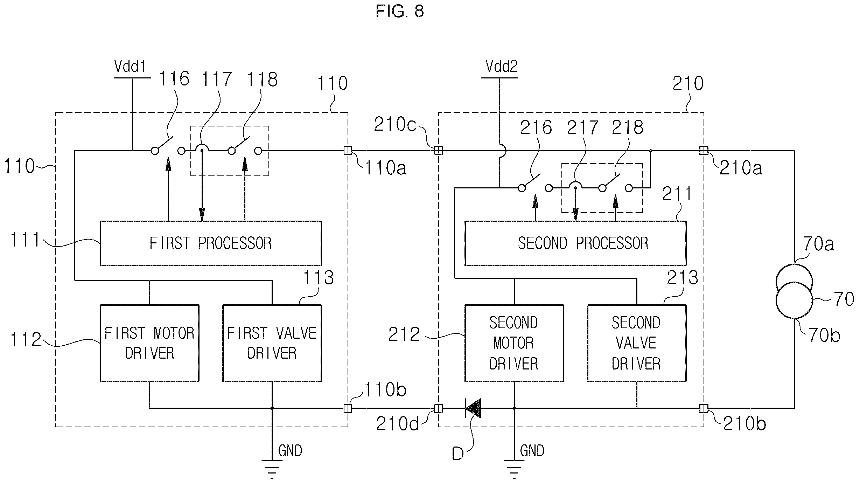

FIG. 8 is a block diagram for showing connections between a first controller, a second controller, and a wheel speed sensor included in a brake system according to an embodiment of the present invention.

A brake system may include the wheel speed sensor 70, the first controller 110, and the second controller 210. As shown in FIG. 8, the first controller 110 may be connected in series to the second controller 210, and the first and second controllers 110 and 210 may be connected in series to the wheel speed sensor 70. The first controller 110 may be connected to the wheel speed sensor 70 via the second controller 210.

The first controller 110 may include the first motor driver 112, the first valve driver 113, the first switch 116, the first current sensor 117, the third switch 118, and the first processor 111. One or more of the first motor driver 112, the first valve driver 113, the first switch 116, the first current sensor 117, the third switch 118, and the first processor 111 may be not essential components of the first controller 110, and may be omitted from the first controller 110.

The above descriptions about the first motor driver and the first valve driver, given together with FIG. 4 may substitute for descriptions about the first motor driver 112 and the first valve driver 113.

The first controller 110 may obtain power from the first power source Vdd1. The current provided from the first power source Vdd1 may flow to the common ground GND via the first controller 110.

The first controller 110 may include the pair of first terminals 110a and 110b respectively connected to the pair of terminals of the second controller 210. The positive first terminal of the first controller 110 may be connected to the positive terminal of the second controller 210, and the negative first terminal 110b of the first controller 110 may be connected to the negative terminal of the second controller 210. The positive first terminal 110a may be connected to the first power source Vdd1, and the first switch 116, the first current sensor 117, and the third switch 118 may be provided on the line connecting the positive first terminal 110a to the first power source Vdd1. The negative first terminal 110b may be connected to the common ground GND.

In other words, the first switch 116, the first current sensor 117, the third switch 118, the wheel speed sensor 70, and the second controller 210 may be connected in series to each other between the first power source Vdd1 and the common ground GND. Also, the current provided from the first power source Vdd1 may be supplied to the wheel speed sensor 70 via the first switch 116, the first current sensor 117, the third switch 118, and the second controller 210.

The above descriptions about the first switch, the first current sensor, the third switch, and the first processor, given together with FIG. 5 may substitute for descriptions about the first switch 116, the first current sensor 117, the third switch 118, and the first processor 111.

The second controller 210 may include the second motor driver 212, the second valve driver 213, the second switch 216, the second current sensor 217, the fourth switch 218, and the second processor 211. One or more of the second motor driver 212, the second valve driver 213, the second switch 216, the second current sensor 217, the fourth switch 218, and the second processor 211 may be not essential components of the second controller 210, and may be omitted from the second controller 210.

The above descriptions about the second motor driver and the second valve driver, given together with FIG. 4 may substitute for descriptions about the second motor driver 212 and the second valve driver 113.

The second controller 210 may obtain power from the second power source Vdd2. The current provided from the second power source Vdd2 may flow to the common ground GND via the second controller 210.

The second controller 210 may include the pair of second terminals 210a and 210b respectively connected to both terminals of the wheel speed sensor 70, and a pair of fourth terminals 210c and 210d respectively connected to the pair of first terminals 110a and 110b of the first controller 110. The positive second terminal 210a of the second controller 210 may be connected to the power terminal 70a of the wheel speed sensor 70, and the negative second terminal 210b of the second controller 210 may be connected to the signal terminal 70b of the wheel speed sensor 70. A positive fourth terminal 210c of the second controller 210 may be connected to the positive first terminal 110a of the first controller 110, and a negative fourth terminal 210d of the second controller 210 may be connected to the negative first terminal 110b of the first controller 110. The positive second terminal 210a may be connected to the positive fourth terminal 210c, and the positive second and fourth terminals 210a and 210c may be connected to the second power source Vdd2. The second switch 216, the second current sensor 217, and the fourth switch 218 may be provided on a line connecting the positive second and fourth terminals 210a and 210c to the second power source Vdd2. The negative second terminal 210b may be connected to the negative fourth terminal 210d, and the negative second and fourth terminals 210b and 210d may be connected to the common ground GND.

In other words, the second switch 216, the second current sensor 217, the fourth switch 218, and the wheel speed sensor 70 may be connected in series to each other between the second power source Vdd2 and the common ground GND. Also, the current provided from the second power source Vdd2 may be supplied to the wheel speed sensor 70 via the second switch 216, the second current sensor 217, and the fourth switch 218.

The above descriptions about the second switch, the second current sensor, the fourth switch, and the second processor, given together with FIG. 5 may substitute for descriptions about the second switch 216, the second current sensor 217, the fourth switch 218, and the second processor 211.

Selectively or optionally, a diode D may be provided between the negative fourth terminal 210d of the second controller 210 and the common ground GND or the wheel speed sensor 70.

The diode D may block current flowing in one direction from the negative fourth terminal 210d to the common ground GND, and allow current flowing in the other direction from the signal terminal 70b of the wheel speed sensor 70 to the negative fourth terminal 210d. In other words, the diode D may block the current flowing from the first motor driver 112 and the first valve driver 113 of the first controller 110 to the common ground GND, and allow the current flowing from the wheel speed sensor 70 to the first controller 110.

Thereby, although the line between the first controller 110 and the common ground GND is disconnected, a large amount of current of the first motor driver 112 and the first valve driver 113 of the first controller 110 flowing to the common ground GND through a line between the negative first terminal 110b and the negative fourth terminal 210d may be prevented.

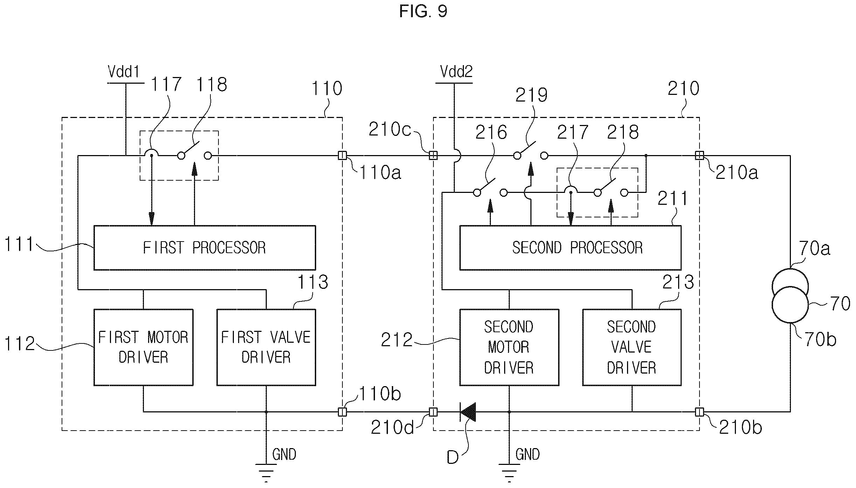

FIG. 9 is a block diagram for showing connections between a first controller, a second controller, and a wheel speed sensor included in a brake system according to an embodiment of the present invention.

A brake system may include the wheel speed sensor 70, the first controller 110, and the second controller 210. As shown in FIG. 9, the first controller 110 may be connected in series to the second controller 210, and the first and second controllers 110 and 210 may be connected in series to the wheel speed sensor 70. The first controller 110 may be connected to the wheel speed sensor 70 via the second controller 210.

The first controller 110 may include the first motor driver 112, the first valve driver 113, the first current sensor 117, the third switch 118, and the first processor 111. One or more of the first motor driver 112, the first valve driver 113, the first current sensor 117, the third switch 118, and the first processor 111 may be not essential components of the first controller 110, and may be omitted from the first controller 110.

The above descriptions about the first motor driver and the first valve driver, given together with FIG. 4 may substitute for descriptions about the first motor driver 112 and the first valve driver 113.

The first controller 110 may obtain power from the first power source Vdd1. The current provided from the first power source Vdd1 may flow to the common ground GND via the first controller 110.

The first controller 110 may include the pair of first terminals 110a and 110b respectively connected to the pair of terminals of the second controller 210. The positive first terminal 110a of the first controller 110 may be connected to the positive terminal of the second controller 210, and the negative first terminal 110b of the first controller 110 may be connected to the negative terminal of the second controller 210. The positive first terminal 110a may be connected to the first power source Vdd1, and the first current sensor 117 and the third switch 118 may be provided on the line connecting the positive first terminal 110a to the first power source Vdd1. The negative first terminal 110b may be connected to the common ground GND.

In other words, the first current sensor 117, the third switch 118, the wheel speed sensor 70, and the second controller 210 may be connected in series to each other between the first power source Vdd1 and the common ground GND. Also, the current provided from the first power source Vdd1 may be supplied to the wheel speed sensor 70 via the first current sensor 117, the third switch 118, and the second controller 210.

The above descriptions about the first current sensor, the third switch, and the first processor, given together with FIG. 5 may substitute for descriptions about the first current sensor 117, the third switch 118, and the first processor 111.

The second controller 210 may include the second motor driver 212, the second valve driver 213, the second valve driver 213, the second switch 216, the second current sensor 217, the fourth switch 218, a fifth switch 219, and the second processor 211. One or more of the second motor driver 212, the second valve driver 213, the second switch 216, the second current sensor 217, the fourth switch 218, the fifth switch 219, and the second processor 211 may not be essential components of the second controller 210, and may be omitted from the second controller 210.

The above descriptions about the second motor driver and the second valve driver, given together with FIG. 4 may substitute for descriptions about the second motor driver 212 and the second valve driver 213.

The second controller 210 may obtain power from the second power source Vdd2. The current provided from the second power source Vdd2 may flow to the common ground GND via the second controller 210.

The second controller 210 may include the pair of second terminals 210a and 210b respectively connected to both terminals of the wheel speed sensor 70, and the pair of fourth terminals 210c and 210d respectively connected to the pair of first terminals 110a and 110b of the first controller 110. The positive second terminal 210a of the second controller 210 may be connected to the power terminal 70a of the wheel speed sensor 70, and the negative second terminal 210b of the second controller 210 may be connected to the signal terminal 70b of the wheel speed sensor 70. The positive fourth terminal 210c of the second controller 210 may be connected to the positive first terminal 110a of the first controller 110, and the negative fourth terminal 210d of the second controller 210 may be connected to the negative first terminal 110b of the first controller 110. The positive second terminal 210a may be connected to the positive fourth terminal 210c, and the positive second and fourth terminals 210a and 210c may be connected to the second power source Vdd2. The fifth switch 219 may be provided on a line connecting the positive second terminal 210a to the positive fourth terminal 210c. The second switch 216, the second current sensor 217, and the fourth switch 218 may be provided on the line connecting the positive second and fourth terminals 210a and 210c to the second power source Vdd2. The negative second terminal 210b may be connected to the negative fourth terminal 210d, and the negative second and fourth terminals 210b and 210d may be connected to the common ground GND.

In other words, the second switch 216, the second current sensor 217, the fourth switch 218, and the wheel speed sensor 70 may be connected in series to each other between the second power source Vdd2 and the common ground GND. Also, the current provided from the second power source Vdd2 may be supplied to the wheel speed sensor 70 via the second switch 216, the second current sensor 217, and the fourth switch 218.

Also, the first current sensor 117, the third switch 118, the fifth switch 219, and the wheel speed sensor 70 may be connected in series to each other between the first power source Vdd1 and the common ground GND. Also, the current provided from the first power source Vdd1 may be supplied to the wheel speed sensor 70 via the first current sensor 117, the third switch 118, and the fifth switch 219.

The above description about the second switch, the second current sensor, the fourth switch, and the second processor, given together with FIG. 5 may substrate for descriptions about the second switch 216, the second current sensor 217, the fourth switch 218, and the second processor 211.

The fifth switch 219 may be provided on a conductive line between the positive second terminal 210a and the positive fourth terminal 210c. In other words, the fifth switch 219 may be provided between the first power source Vdd1 and the wheel speed sensor 70, and be configured to selectively allow or block an electrical connection between the first power source Vdd1 and the wheel speed sensor 70 in response to a control signal from the second processor 211.

The second processor 211 may provide a signal (e.g. an on signal) for maintaining a closed state (e.g. an on state) of the fifth switch 219 to the fifth switch 219 while the first hydraulic pressure supply device 100 is in the normal state. Accordingly, the fifth switch 219 may be maintained in the closed state (e.g. an on state) while the first hydraulic pressure supply device 100 is in the normal state, and allow current supply from the first power source Vdd1 to the wheel speed sensor 70.

The second processor 211 may provide a signal (e.g. an off signal) for opening (e.g. turning off) the fifth switch 219 to the fifth switch 219 while the first hydraulic pressure supply device 100 is in a failure state. Accordingly, the fifth switch 219 may be maintained in the open state (e.g. an off state) while the first hydraulic pressure supply device 100 is in the failure state, and block the current supply from the first power source Vdd1 to the wheel speed sensor 70. However, the fifth switch 219 may be closed (e.g. turned on) while no control signal is received from the second processor 211, for example, due to a failure of the second processor 211.

Selectively or optionally, a diode D may be provided between the negative fourth terminal 210d of the second controller 210 and the common ground GND or the wheel speed sensor 70.

The above descriptions about the diode, given together with FIG. 8 may substitute for descriptions about the diode D.

According to an aspect of the present disclosure, there may be provided a brake system including a hydraulic pressure supply device and an auxiliary supply device, which are capable of obtaining sensing information from a single sensor.

According to another aspect of the present disclosure, there may be provided a brake system capable of stably obtaining sensing information even when an electrical failure occurs in a hydraulic pressure supply device or an auxiliary supply device.

Exemplary embodiments of the present disclosure have been described above. In the exemplary embodiments described above, some components may be implemented as a "module". Here, the term 'module' means, but is not limited to, a software and/or hardware component, such as a Field Programmable Gate Array (FPGA) or Application Specific Integrated Circuit (ASIC), which performs certain tasks. A module may advantageously be configured to reside on the addressable storage medium and configured to execute on one or more processors.

Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The operations provided for in the components and modules may be combined into fewer components and modules or further separated into additional components and modules. In addition, the components and modules may be implemented such that they execute one or more CPUs in a device.

With that being said, and in addition to the above described exemplary embodiments, embodiments can thus be implemented through computer readable code/instructions in/on a medium, e.g., a computer readable medium, to control at least one processing element to implement any above described exemplary embodiment. The medium can correspond to any medium/media permitting the storing and/or transmission of the computer readable code.

The computer-readable code can be recorded on a medium or transmitted through the Internet. The medium may include Read Only Memory (ROM), Random Access Memory (RAM), Compact Disk-Read Only Memories (CD-ROMs), magnetic tapes, floppy disks, and optical recording medium. Also, the medium may be a non-transitory computer-readable medium. The media may also be a distributed network, so that the computer readable code is stored or transferred and executed in a distributed fashion. Still further, as only an example, the processing element could include at least one processor or at least one computer processor, and processing elements may be distributed and/or included in a single device.

While exemplary embodiments have been described with respect to a limited number of embodiments, those skilled in the art, having the benefit of this invention, will appreciate that other embodiments can be devised which do not depart from the scope as disclosed herein. Accordingly, the scope should be limited only by the attached claims.

## Claims

1. A brake system comprising:
a first hydraulic pressure supplier (150) hydraulically connected to one or more of wheel cylinders (21, 22, 23, 24) of a vehicle (1);
a second hydraulic pressure supplier (250) hydraulically connected to one or more of the wheel cylinders (21, 22, 23, 24);
a first controller (110) configured to control the first hydraulic pressure supplier (150) to provide a first hydraulic pressure to one or more of the wheel cylinders (21, 22, 23, 24); and
a second controller (210) configured to control the second hydraulic pressure supplier (250) to provide a second hydraulic pressure to one or more of the wheel cylinders (21, 22, 23, 24),
**characterized in that** :
the first controller (110) is connected to a first power source of the vehicle (1) and a wheel speed sensor (70) of the vehicle (1), the first controller (110) configured to control a first current of the first power source provided to the wheel speed sensor (70) via the second controller (210), and
the second controller (210) is connected to a second power source of the vehicle (1) and the wheel speed sensor (70), the second controller (210) configured to selectively allow or block a flow of the first current of the first power source to the wheel speed sensor (70) and selectively allow or block a flow of a second current of the second power source to the wheel speed sensor (70).

2. The brake system of claim 1, wherein
the first controller (110) includes:
a first current sensor (117) configured to output a first current signal associated with the first current of the first power source, and
a first processor (111) configured to identify a wheel speed of the vehicle (1) based on the first current signal associated with the first current of the first power source, and
the second controller (210) includes:
a first switch (116) configured to selectively allow or block the flow of the first current of the first power source to the wheel speed sensor (70),
a second switch (216) configured to selectively allow or block the flow of the second current of the second power source to the wheel speed sensor (70),
a second current sensor (217) configured to output a second current signal associated with the second current of the second power source, and
a second processor (211) configured to control the first switch (116) and the second switch (216) and identify a wheel speed of the vehicle (1) based on the second current signal associated with the second current of the second power source.

3. The brake system of claim 2, wherein
the first switch (116) is connected in series to the first current sensor (117) between the first controller (110) and the wheel speed sensor (70), and
the second switch (216) is connected in series to the second current sensor (217) between the second power source and the wheel speed sensor (70).

4. The brake system of any of claims 2 or 3, wherein
the first processor (111) is configured to, in response to identification that the first hydraulic pressure supplier (150) is in a normal state, provide a periodic signal to the second processor (211), and
the second processor (211) is configured to, in response to the periodic signal from the first processor (111), control the second switch (216) to allow the flow of the first current of the first power source to the wheel speed sensor (70) and control the second switch (216) to block the flow of the second current of the second power source to the wheel speed sensor (70).

5. The brake system of claim 4, wherein
the first processor (111) is configured, in response to identification that the first hydraulic pressure supplier (150) is in a failure state, not to provide the periodic signal to the second processor (211),
the second processor (211) is configured, in response to identification that the second processor (211) does not receive the periodic signal from the first processor (111), to control the first switch (116) to block the flow of the first current of the first power source to the wheel speed sensor (70) and control the second switch (216) to allow the flow of the second current of the second power source to the wheel speed sensor (70).

6. The brake system of any of claims 2 to 5, wherein
the first processor (111) is configured to, in response to identification that the first hydraulic pressure supplier (150) is in a normal state, provide a periodic signal to the second processor (211) and control the first hydraulic pressure supplier (150) according to an output signal from a pedal sensor (60) of the vehicle (1), and
the second processor (211) is configured to, in response to identification that the second processor (211) does not receive the periodic signal from the first processor (111), control the second hydraulic pressure supplier (250) according to an output signal from the pedal sensor (60) of the vehicle (1).

7. The brake system of any of claims 1 to 6, wherein the second controller (210) further includes a diode (D) connected between a ground of the second controller (210) and the first controller (110), the diode (D) configured to block current flowing from the first controller (110) to the ground of the second controller (210).

8. A brake system comprising:
a first hydraulic pressure supplier (150) hydraulically connected to one or more of wheel cylinders (21, 22, 23, 24) of a vehicle (1);
a second hydraulic pressure supplier (250) hydraulically connected to one or more of the wheel cylinders (21, 22, 23, 24);
a first controller (110) configured to control the first hydraulic pressure supplier (150) to provide a first hydraulic pressure to one or more of the wheel cylinders (21, 22, 23, 24); and
a second controller (210) configured to control the second hydraulic pressure supplier (250) to provide a second hydraulic pressure to one or more of the wheel cylinders (21, 22, 23, 24),
**characterized in that** :
the first controller (110) is connected to a first power source of the vehicle (1) and a wheel speed sensor (70) of the vehicle (1), the first controller (110) configured to selectively allow or block a flow of a first current of the first power source to the wheel speed sensor (70), and
the second controller (210) is connected to a second power source of the vehicle (1) and the wheel speed sensor (70), the second controller (210) configured to selectively allow or block a flow of a second current of the second power source to the wheel speed sensor (70).

9. The brake system of claim 8, wherein the first controller (110) is configured to selectively allow or block a flow of a first current of the first power source to the wheel speed sensor (70) via the second controller (210).

10. The brake system of claim 9, wherein
the first controller (110) includes:
a first switch (116) configured to selectively allow or block the flow of the first current of the first power source to the wheel speed sensor (70) via the second controller (210),
a first current sensor (117) configured to output a first current signal associated with the first current of the first power source, and
a first processor (111) configured to control the first switch (116) and identify a wheel speed of the vehicle (1) based on the first current signal associated with the first current of the first power source, and
the second controller (210) includes:
a second switch (216) configured to selectively allow or block the flow of the second current of the second power source to the wheel speed sensor (70),
a second current sensor (217) configured to output a second current signal associated with the second current of the second power source, and
a second processor (211) configured to identify the wheel speed of the vehicle (1) based on the second current signal associated with the second current of the second power source.

11. The brake system of claim 10, wherein
the first switch (116) is connected in series to the first current sensor (117) between the first power source and the second controller (210), and
the second switch (216) is connected in series to the second current sensor (217) between the second power source and the wheel speed sensor (70).

12. The brake system of any of claims 10 or 11, wherein
the first processor (111) is configured to, in response to identification that the first hydraulic pressure supplier (150) is in a normal state, control the first switch (116) of the first controller (110) to provide a periodic signal to the second processor (211) and allow the flow of the first current of the first power source to the wheel speed sensor (70), and
the second processor (211) is configured to, in response to the periodic signal from the first processor (111), control the second switch (216) of the second controller (210) to block the flow of the second current of the second power source to the wheel speed sensor (70).

13. The brake system of claim 12, wherein
the first processor (111) is configured to, in response to identification that the first hydraulic pressure supplier (150) is in a failure state, control the first switch (116) of the first controller (110) not to provide the periodic signal to the second processor (211) and block the flow of the first current of the first power source to the wheel speed sensor (70), and
the second processor (211) is configured to, in response to identification that the second processor (211) does not receive the periodic signal from the first processor (111), control the second switch (216) of the second controller (210) to allow the flow of the second current of the second power source to the wheel speed sensor (70).

14. The brake system of any of claims 10 to 13, wherein
the first processor (111) is configured to, in response to identification that the first hydraulic pressure supplier (150) is in a normal state, provide a periodic signal to the second processor (211) and control the first hydraulic pressure supplier (150) according to an output signal from a pedal sensor (60) of the vehicle (1), and
the second processor (211) is configured to, in response to identification that the second processor (211) does not receive the periodic signal from the first processor (111), control the second hydraulic pressure supplier (250) according to the output signal from the pedal sensor (70) of the vehicle (1).

15. The brake system of any of claims 10 to 14, wherein the second controller (210) further includes a diode (D) connected between a ground of the second controller (210) and the first controller (110), the diode (D) configured to block current flowing from the first controller (110) to the ground of the second controller (210).

## Patentansprüche

1. Bremssystem, umfassend:
eine erste hydraulische Druckliefervorrichtung (150), die hydraulisch mit einem oder mehreren Radzylindern (21, 22, 23, 24) eines Fahrzeugs (1) verbunden ist;
eine zweite hydraulische Druckliefervorrichtung (250), die hydraulisch mit einem oder mehreren Radzylindern (21, 22, 23, 24) verbunden ist;
eine erste Steuereinheit (110), die eingerichtet ist, die erste hydraulische Druckliefervorrichtung (150) so zu steuern, dass ein erster hydraulischer Druck an einen oder mehrere der Radzylinder (21, 22, 23, 24) bereitgestellt wird; und
eine zweite Steuereinheit (210), die eingerichtet ist, die zweite hydraulische Druckliefervorrichtung (250) so zu steuern, dass ein zweiter hydraulischer Druck an einen oder mehrere der Radzylinder (21, 22, 23, 24) bereitgestellt wird,
**dadurch gekennzeichnet, dass**:
die erste Steuereinheit (110) mit einer ersten elektrischen Versorgungsquelle des Fahrzeugs (1) und einem Raddrehzahlsensor (70) des Fahrzeugs (1) verbunden ist, wobei die erste Steuereinheit (110) eingerichtet ist, einen ersten Strom der ersten elektrischen Versorgungsquelle zu steuern, der dem Raddrehzahlsensor (70) über die zweite Steuereinheit (210) bereitgestellt wird, und
die zweite Steuereinheit (210) mit einer zweiten elektrischen Versorgungsquelle des Fahrzeugs (1) und dem Raddrehzahlsensor (70) verbunden ist, wobei die zweite Steuereinheit (210) eingerichtet ist, ein Fließen des ersten Stroms von der ersten elektrischen Versorgungsquelle zum Raddrehzahlsensor (70) wahlweise zuzulassen oder zu blockieren und ein Fließen eines zweiten Stroms von der zweiten elektrischen Versorgungsquelle zum Raddrehzahlsensor (70) wahlweise zuzulassen oder zu blockieren.

2. Bremssystem nach Anspruch 1, wobei
die erste Steuereinheit (110) umfasst:
einen ersten Stromsensor (117), der eingerichtet ist, ein erstes Stromsignal auszugeben, das dem ersten Strom der ersten elektrischen Versorgungsquelle zugeordnet ist, und
einen ersten Prozessor (111), der eingerichtet ist, eine Radgeschwindigkeit des Fahrzeugs (1) auf der Grundlage des ersten Stromsignals zu identifizieren, das dem ersten Strom der ersten elektrischen Versorgungsquelle zugeordnet ist, und
die zweite Steuereinheit (210) umfasst:
einen ersten Schalter (116), der eingerichtet ist, das Fließen des ersten Stroms der ersten elektrischen Versorgungsquelle zum Raddrehzahlsensor (70) wahlweise zuzulassen oder zu blockieren,
einen zweiten Schalter (216), der eingerichtet ist, das Fließen des zweiten Stroms der zweiten elektrischen Versorgungsquelle zum Raddrehzahlsensor (70) wahlweise zuzulassen oder zu blockieren,
einen zweiten Stromsensor (217), der eingerichtet ist, ein erstes Stromsignal auszugeben, das dem zweiten Strom der zweiten elektrischen Versorgungsquelle zugeordnet ist, und
einen zweiten Prozessor (211), der eingerichtet ist, den ersten Schalter (116) und den zweiten Schalter (216) zu steuern und eine Raddrehzahl des Fahrzeugs (1) auf der Grundlage des zweiten Stromsignals zu identifizieren, das dem zweiten Strom der zweiten elektrischen Versorgungsquelle zugeordnet ist.

3. Bremssystem nach Anspruch 2, wobei
der erste Schalter (116) in Reihe mit dem ersten Stromsensor (117) zwischen der ersten Steuereinheit (110) und dem Raddrehzahlsensor (70) geschaltet ist, und
der zweite Schalter (216) in Reihe mit dem zweiten Stromsensor (217) zwischen der zweiten Stromquelle und dem Raddrehzahlsensor (70) geschaltet ist.

4. Bremssystem nach einem der Ansprüche 2 oder 3, wobei
der erste Prozessor (111) eingerichtet ist, als Reaktion auf die Feststellung, dass sich die erste hydraulische Druckliefervorrichtung (150) in einem Normalzustand befindet, ein periodisches Signal an den zweiten Prozessor (211) bereitszustellen, und
der zweite Prozessor (211) eingerichtet ist, als Reaktion auf das periodische Signal vom ersten Prozessor (111) den zweiten Schalter (216) so zu steuern, dass das Fließen des ersten Stroms der ersten elektrischen Versorgungsquelle zum Raddrehzahlsensor (70) ermöglicht wird, und den zweiten Schalter (216) so zu steuern, dass das Fließen des zweiten Stroms der zweiten elektrischen Versorgungsquelle zum Raddrehzahlsensor (70) blockiert wird.

5. Bremssystem nach Anspruch 4, wobei
der erste Prozessor (111) eingerichtet ist, als Reaktion auf die Feststellung, dass sich die erste hydraulische Druckliefervorrichtung (150) in einem Fehlerzustand befindet, das periodische Signal nicht an den zweiten Prozessor (211) bereitszustellen,
der zweite Prozessor (211) eingerichtet ist, als Reaktion auf die Feststellung, dass der zweite Prozessor (211) das periodische Signal vom ersten Prozessor (111) nicht empfängt, den ersten Schalter (116) so zu steuern, dass das Fließen des ersten Stroms der ersten elektrischen Versorgungsquelle zum Raddrehzahlsensor (70) blockiert wird, und den zweiten Schalter (216) so zu steuern, dass das Fließen des zweiten Stroms der zweiten elektrischen Versorgungsquelle zum Raddrehzahlsensor (70) ermöglicht wird.

6. Bremssystem nach einem der Ansprüche 2 bis 5, wobei
der erste Prozessor (111) eingerichtet ist, als Reaktion auf die Feststellung, dass sich die erste hydraulische Druckliefervorrichtung (150) in einem Normalzustand befindet, ein periodisches Signal an den zweiten Prozessor (211) bereitzustellen und die erste Hydraulikdruckquelle (150) entsprechend einem Ausgangssignal eines Pedalsensors (60) des Fahrzeugs (1) zu steuern, und
der zweite Prozessor (211) eingerichtet ist, als Reaktion auf die Feststellung, dass der zweite Prozessor (211) das periodische Signal vom ersten Prozessor (111) nicht empfängt, die zweite hydraulische Druckliefervorrichtung (250) entsprechend einem Ausgangssignal des Pedalsensors (60) des Fahrzeugs (1) zu steuern.

7. Bremssystem nach einem der Ansprüche 1 bis 6, wobei die zweite Steuereinheit (210) ferner eine Diode (D) umfasst, die zwischen einer Masse der zweiten Steuereinheit (210) und der ersten Steuereinheit (110) geschaltet ist, wobei die Diode (D) eingerichtet ist, einen Stromfluss von der ersten Steuereinheit (110) zur Masse der zweiten Steuereinheit (210) zu blockieren.

8. Bremssystem, umfassend:
eine erste hydraulische Druckliefervorrichtung (150), die hydraulisch mit einem oder mehreren Radzylindern (21, 22, 23, 24) eines Fahrzeugs (1) verbunden ist;
eine zweite hydraulische Druckliefervorrichtung (250), die hydraulisch mit einem oder mehreren Radzylindern (21, 22, 23, 24) verbunden ist;
eine erste Steuereinheit (110), die eingerichtet ist, die erste hydraulische Druckliefervorrichtung (150) so zu steuern, dass ein erster hydraulischer Druck an einen oder mehrere der Radzylinder (21, 22, 23, 24) bereitgestellt wird; und
eine zweite Steuereinheit (210), die eingerichtet ist, die zweite hydraulische Druckliefervorrichtung (250) so zu steuern, dass ein zweiter hydraulischer Druck an einen oder mehrere der Radzylinder (21, 22, 23, 24) bereitgestellt wird,
**dadurch gekennzeichnet, dass**:
die erste Steuereinheit (110) mit einer ersten elektrischen Versorgungsquelle des Fahrzeugs (1) und einem Raddrehzahlsensor (70) des Fahrzeugs (1) verbunden ist, wobei die erste Steuereinheit (110) eingerichtet ist, ein Fließen eines ersten Stroms der ersten elektrischen Versorgungsquelle zum Raddrehzahlsensor (70) wahlweise zuzulassen oder zu blockieren, und
die zweite Steuereinheit (210) mit einer zweiten elektrischen Versorgungsquelle des Fahrzeugs (1) und dem Raddrehzahlsensor (70) verbunden ist, wobei die zweite Steuereinheit (210) eingerichtet ist, ein Fließen eines zweiten Stroms der zweiten Stromquelle zum Raddrehzahlsensor (70) wahlweise zuzulassen oder zu blockieren.

9. Bremssystem nach Anspruch 8, wobei die erste Steuereinheit (110) eingerichtet ist, ein Fließen eines ersten Stroms der ersten elektrischen Versorgungsquelle zum Raddrehzahlsensor (70) über die zweite Steuereinheit (210) wahlweise zuzulassen oder zu blockieren.

10. Bremssystem nach Anspruch 9, wobei
die erste Steuereinheit (110) umfasst:
einen ersten Schalter (116), der eingerichtet ist, das Fließen des ersten Stroms der ersten elektrischen Versorgungsquelle zum Raddrehzahlsensor (70) über die zweite Steuereinheit (210) wahlweise zuzulassen oder zu blockieren,
einen ersten Stromsensor (117), der eingerichtet ist, ein erstes Stromsignal auszugeben, das dem ersten Strom der ersten elektrischen Versorgungsquelle zugeordnet ist, und
einen ersten Prozessor (111), der eingerichtet ist, den ersten Schalter (116) zu steuern und eine Raddrehzahl des Fahrzeugs (1) auf der Grundlage des ersten Stromsignals zu identifizieren, das dem ersten Strom der ersten elektrischen Versorgungsquelle zugeordnet ist, und
die zweite Steuereinheit (210) umfasst:
einen zweiten Schalter (216), der eingerichtet ist, das Fließen des zweiten Stroms der zweiten elektrischen Versorgungsquelle zum Raddrehzahlsensor (70) wahlweise zuzulassen oder zu blockieren,
einen zweiten Stromsensor (217), der eingerichtet ist, ein erstes Stromsignal auszugeben, das dem zweiten Strom der zweiten elektrischen Versorgungsquelle zugeordnet ist, und
einen zweiten Prozessor (211), der eingerichtet ist, die Raddrehzahl des Fahrzeugs (1) auf der Grundlage des zweiten Stromsignals zu identifizieren, das dem zweiten Strom der zweiten elektrischen Versorgungsquelle zugeordnet ist.

11. Bremssystem nach Anspruch 10, wobei
der erste Schalter (116) in Reihe mit dem ersten Stromsensor (117) zwischen der ersten elektrischen Versorgungsquelle und der zweiten Steuereinheit (210) geschaltet ist, und
der zweite Schalter (216) in Reihe mit dem zweiten Stromsensor (217) zwischen der zweiten elektrischen Versorgungsquelle und dem Raddrehzahlsensor (70) geschaltet ist.

12. Bremssystem nach einem der Ansprüche 10 oder 11, wobei
der erste Prozessor (111) eingerichtet ist, als Reaktion auf die Feststellung, dass sich die erste hydraulische Druckliefervorrichtung (150) in einem Normalzustand befindet, den ersten Schalter (116) der ersten Steuereinheit (110) so zu steuern, dass ein periodisches Signal an den zweiten Prozessor (211) bereitgestellt wird und das Fließen des ersten Stroms der ersten elektrischen Versorgungsquelle zum Raddrehzahlsensor (70) ermöglicht wird, und
der zweite Prozessor (211) eingerichtet ist, als Reaktion auf das periodische Signal vom ersten Prozessor (111) den zweiten Schalter (216) der zweiten Steuereinheit (210) so zu steuern, dass das Fließen des zweiten Stroms der zweiten elektrischen Versorgungsquelle zum Raddrehzahlsensor (70) blockiert wird.

13. Bremssystem nach Anspruch 12, wobei
der erste Prozessor (111) eingerichtet ist, als Reaktion auf die Feststellung, dass sich die erste hydraulische Druckliefervorrichtung (150) in einem Fehlerzustand befindet, den ersten Schalter (116) der ersten Steuereinheit (110) so zu steuern, dass das periodische Signal nicht an den zweiten Prozessor (211) bereitgestellt wird und das Fließen des ersten Stroms der ersten elektrischen Versorgungsquelle zum Raddrehzahlsensor (70) blockiert wird, und
der zweite Prozessor (211) eingerichtet ist, als Reaktion auf die Feststellung, dass der zweite Prozessor (211) das periodische Signal vom ersten Prozessor (111) nicht empfängt, den zweiten Schalter (216) der zweiten Steuereinheit (210) so zu steuern, dass das Fließen des zweiten Stroms der zweiten elektrischen Versorgungsquelle zum Raddrehzahlsensor (70) ermöglicht wird.

14. Bremssystem nach einem der Ansprüche 10 bis 13, wobei
der erste Prozessor (111) eingerichtet ist, als Reaktion auf die Feststellung, dass sich die erste hydraulische Druckliefervorrichtung (150) in einem Normalzustand befindet, ein periodisches Signal an den zweiten Prozessor (211) bereitzustellen und die erste Hydraulikdruckquelle (150) entsprechend einem Ausgangssignal eines Pedalsensors (60) des Fahrzeugs (1) zu steuern, und
der zweite Prozessor (211) eingerichtet ist, als Reaktion auf die Feststellung, dass der zweite Prozessor (211) das periodische Signal vom ersten Prozessor (111) nicht empfängt, die zweite hydraulische Druckliefervorrichtung (250) entsprechend dem Ausgangssignal des Pedalsensors (60) des Fahrzeugs (1) zu steuern.

15. Bremssystem nach einem der Ansprüche 10 bis 14, wobei die zweite Steuereinheit (210) ferner eine Diode (D) umfasst, die zwischen einer Masse der zweiten Steuereinheit (210) und der ersten Steuereinheit (110) geschaltet ist, wobei die Diode (D) eingerichtet ist, einen Stromfluss von der ersten Steuereinheit (110) zur Masse der zweiten Steuereinheit (210) zu blockieren.

## Revendications

1. Système de freinage comprenant :
un premier moyen de fourniture de pression hydraulique (150) qui est connecté hydrauliquement à un ou plusieurs cylindres de roue (21, 22, 23, 24) d'un véhicule (1) ;
un second moyen de fourniture de pression hydraulique (250) qui est connecté hydrauliquement à un ou plusieurs des cylindres de roue (21, 22, 23, 24) ;
un premier contrôleur (110) configuré pour commander le premier moyen de fourniture de pression hydraulique (150) afin de fournir une première pression hydraulique à un ou plusieurs des cylindres de roue (21, 22, 23, 24) ; et
un second contrôleur (210) configuré pour commander le second moyen de fourniture de pression hydraulique (250) afin de fournir une seconde pression hydraulique à un ou plusieurs des cylindres de roue (21, 22, 23, 24),
**caractérisé en ce que** :
le premier contrôleur (110) est connecté à une première source d'alimentation électrique du véhicule (1) et à un capteur de vitesse de roue (70) du véhicule (1), le premier contrôleur (110) étant configuré pour commander un premier courant de la première source d'alimentation électrique qui est fourni au capteur de vitesse de roue (70) via le second contrôleur (210) ; et
le second contrôleur (210) est connecté à une seconde source d'alimentation électrique du véhicule (1) et au capteur de vitesse de roue (70), le second contrôleur (210) étant configuré, de façon sélective, pour autoriser ou pour bloquer une circulation du premier courant de la première source d'alimentation électrique sur le capteur de vitesse de roue (70) et, de façon sélective, pour autoriser ou pour bloquer une circulation d'un second courant de la seconde source d'alimentation électrique sur le capteur de vitesse de roue (70).

2. Système de freinage selon la revendication 1, dans lequel :
le premier contrôleur (110) inclut :
un premier capteur de courant (117) configuré pour émettre en sortie un premier signal de courant qui est associé au premier courant de la première source d'alimentation électrique ; et
un premier processeur (111) configuré pour identifier une vitesse de roue du véhicule (1) sur la base du premier signal de courant qui est associé au premier courant de la première source d'alimentation électrique ; et
le second contrôleur (210) inclut :
un premier commutateur (116) configuré, de façon sélective, pour autoriser ou pour bloquer la circulation du premier courant de la première source d'alimentation électrique sur le capteur de vitesse de roue (70) ;
un second commutateur (216) configuré, de façon sélective, pour autoriser ou pour bloquer la circulation du second courant de la seconde source d'alimentation électrique sur le capteur de vitesse de roue (70) ;
un second capteur de courant (217) configuré pour émettre en sortie un second signal de courant qui est associé au second courant de la seconde source d'alimentation électrique ; et
un second processeur (211) configuré pour commander le premier commutateur (116) et le second commutateur (216) et pour identifier une vitesse de roue du véhicule (1) sur la base du second signal de courant qui est associé au second courant de la seconde source d'alimentation électrique.

3. Système de freinage selon la revendication 2, dans lequel :
le premier commutateur (116) est connecté en série au premier capteur de courant (117) entre le premier contrôleur (110) et le capteur de vitesse de roue (70) ; et
le second commutateur (216) est connecté en série au second capteur de courant (217) entre la seconde source d'alimentation électrique et le capteur de vitesse de roue (70).

4. Système de freinage selon l'une quelconque des revendications 2 ou 3, dans lequel :
le premier processeur (111) est configuré, en réponse à l'identification du fait que le premier moyen de fourniture de pression hydraulique (150) est dans un état normal, pour fournir un signal périodique au second processeur (211) ; et
le second processeur (211) est configuré, en réponse au signal périodique en provenance du premier processeur (111), pour commander le second commutateur (216) afin d'autoriser la circulation du premier courant de la première source d'alimentation électrique sur le capteur de vitesse de roue (70) et pour commander le second commutateur (216) afin de bloquer la circulation du second courant de la seconde source d'alimentation électrique sur le capteur de vitesse de roue (70).

5. Système de freinage selon la revendication 4, dans lequel :
le premier processeur (111) est configuré, en réponse à l'identification du fait que le premier moyen de fourniture de pression hydraulique (150) est dans un état de défaillance, pour ne pas fournir le signal périodique au second processeur (211) ; et
le second processeur (211) est configuré, en réponse à l'identification du fait que le second processeur (211) ne reçoit pas le signal périodique en provenance du premier processeur (111), pour commander le premier commutateur (116) afin de bloquer la circulation du premier courant de la première source d'alimentation électrique sur le capteur de vitesse de roue (70) et pour commander le second commutateur (216) afin d'autoriser la circulation du second courant de la seconde source d'alimentation électrique sur le capteur de vitesse de roue (70).

6. Système de freinage selon l'une quelconque des revendications 2 à 5, dans lequel :
le premier processeur (111) est configuré, en réponse à l'identification du fait que le premier moyen de fourniture de pression hydraulique (150) est dans un état normal, pour fournir un signal périodique au second processeur (211) et pour commander le premier moyen de fourniture de pression hydraulique (150) conformément à un signal de sortie en provenance d'un capteur de pédale (60) du véhicule (1) ; et
le second processeur (211) est configuré, en réponse à l'identification du fait que le second processeur (211) ne reçoit pas le signal périodique en provenance du premier processeur (111), pour commander le second moyen de fourniture de pression hydraulique (250) conformément à un signal de sortie en provenance du capteur de pédale (60) du véhicule (1).

7. Système de freinage selon l'une quelconque des revendications 1 à 6, dans lequel le second contrôleur (210) inclut en outre une diode (D) qui est connectée entre une masse du second contrôleur (210) et le premier contrôleur (110), la diode (D) étant configurée pour bloquer le courant qui circule depuis le premier contrôleur (110) jusqu'à la masse du second contrôleur (210).

8. Système de freinage comprenant :
un premier moyen de fourniture de pression hydraulique (150) qui est connecté hydrauliquement à un ou plusieurs cylindres de roue (21, 22, 23, 24) d'un véhicule (1) ;
un second moyen de fourniture de pression hydraulique (250) qui est connecté hydrauliquement à un ou plusieurs des cylindres de roue (21, 22, 23, 24) ;
un premier contrôleur (110) configuré pour commander le premier moyen de fourniture de pression hydraulique (150) afin de fournir une première pression hydraulique à un ou plusieurs des cylindres de roue (21, 22, 23, 24) ; et
un second contrôleur (210) configuré pour commander le second moyen de fourniture de pression hydraulique (250) afin de fournir une seconde pression hydraulique à un ou plusieurs des cylindres de roue (21, 22, 23, 24),
**caractérisé en ce que** :
le premier contrôleur (110) est connecté à une première source d'alimentation électrique du véhicule (1) et à un capteur de vitesse de roue (70) du véhicule (1), le premier contrôleur (110) étant configuré, de façon sélective, pour autoriser ou pour bloquer une circulation d'un premier courant de la première source d'alimentation électrique sur le capteur de vitesse de roue (70) ; et
le second contrôleur (210) est connecté à une seconde source d'alimentation électrique du véhicule (1) et au capteur de vitesse de roue (70), le second contrôleur (210) étant configuré, de façon sélective, pour autoriser ou pour bloquer une circulation d'un second courant de la seconde source d'alimentation électrique sur le capteur de vitesse de roue (70).

9. Système de freinage selon la revendication 8, dans lequel le premier contrôleur (110) est configuré, de façon sélective, pour autoriser ou pour bloquer une circulation d'un premier courant de la première source d'alimentation électrique sur le capteur de vitesse de roue (70) via le second contrôleur (210).

10. Système de freinage selon la revendication 9, dans lequel :
le premier contrôleur (110) inclut :
un premier commutateur (116) configuré, de façon sélective, pour autoriser ou pour bloquer la circulation du premier courant de la première source d'alimentation électrique sur le capteur de vitesse de roue (70) via le second contrôleur (210) ;
un premier capteur de courant (117) configuré pour émettre en sortie un premier signal de courant qui est associé au premier courant de la première source d'alimentation électrique ; et
un premier processeur (111) configuré pour commander le premier commutateur (116) et pour identifier une vitesse de roue du véhicule (1) sur la base du premier signal de courant qui est associé au premier courant de la première source d'alimentation électrique ; et
le second contrôleur (210) inclut :
un second commutateur (216) configuré, de façon sélective, pour autoriser ou pour bloquer la circulation du second courant de la seconde source d'alimentation électrique sur le capteur de vitesse de roue (70) ;
un second capteur de courant (217) configuré pour émettre en sortie un second signal de courant qui est associé au second courant de la seconde source d'alimentation électrique ; et
un second processeur (211) configuré pour identifier la vitesse de roue du véhicule (1) sur la base du second signal de courant qui est associé au second courant de la seconde source d'alimentation électrique.

11. Système de freinage selon la revendication 10, dans lequel :
le premier commutateur (116) est connecté en série au premier capteur de courant (117) entre la première source d'alimentation électrique et le second contrôleur (210) ; et
le second commutateur (216) est connecté en série au second capteur de courant (217) entre la seconde source d'alimentation électrique et le capteur de vitesse de roue (70).

12. Système de freinage selon l'une quelconque des revendications 10 ou 11, dans lequel :
le premier processeur (111) est configuré, en réponse à l'identification du fait que le premier moyen de fourniture de pression hydraulique (150) est dans un état normal, pour commander le premier commutateur (116) du premier contrôleur (110) afin de fournir un signal périodique au second processeur (211) et afin d'autoriser la circulation du premier courant de la première source d'alimentation électrique sur le capteur de vitesse de roue (70) ; et
le second processeur (211) est configuré, en réponse au signal périodique en provenance du premier processeur (111), pour commander le second commutateur (216) du second contrôleur (210) afin de bloquer la circulation du second courant de la seconde source d'alimentation électrique sur le capteur de vitesse de roue (70).

13. Système de freinage selon la revendication 12, dans lequel :
le premier processeur (111) est configuré, en réponse à l'identification du fait que le premier moyen de fourniture de pression hydraulique (150) est dans un état de défaillance, pour commander le premier commutateur (116) du premier contrôleur (110) afin de ne pas fournir le signal périodique au second processeur (211) et afin de bloquer la circulation du premier courant de la première source d'alimentation électrique sur le capteur de vitesse de roue (70) ; et
le second processeur (211) est configuré, en réponse à l'identification du fait que le second processeur (211) ne reçoit pas le signal périodique en provenance du premier processeur (111), pour commander le second commutateur (216) du second contrôleur (210) afin d'autoriser la circulation du second courant de la seconde source d'alimentation électrique sur le capteur de vitesse de roue (70).

14. Système de freinage selon l'une quelconque des revendications 10 à 13, dans lequel :
le premier processeur (111) est configuré, en réponse à l'identification du fait que le premier moyen de fourniture de pression hydraulique (150) est dans un état normal, pour fournir un signal périodique au second processeur (211) et pour commander le premier moyen de fourniture de pression hydraulique (150) conformément à un signal de sortie en provenance d'un capteur de pédale (60) du véhicule (1) ; et
le second processeur (211) est configuré, en réponse à l'identification du fait que le second processeur (211) ne reçoit pas le signal périodique en provenance du premier processeur (111), pour commander le second moyen de fourniture de pression hydraulique (250) conformément au signal de sortie en provenance du capteur de pédale (60) du véhicule (1).

15. Système de freinage selon l'une quelconque des revendications 10 à 14, dans lequel le second contrôleur (210) inclut en outre une diode (D) qui est connectée entre une masse du second contrôleur (210) et le premier contrôleur (110), la diode (D) étant configurée pour bloquer le courant qui circule depuis le premier contrôleur (110) jusqu'à la masse du second contrôleur (210).
